(19) Europäisches Patentamt
European Patent Office
Office européen des brevets

(11) **EP 4 648 543 A1**

(12) **EUROPEAN PATENT APPLICATION**
published in accordance with Art. 153(4) EPC

(43) Date of publication:
**12.11.2025 Bulletin 2025/46**

(21) Application number: **24752740.1**

(22) Date of filing: **30.01.2024**

(51) International Patent Classification (IPC):
*H04W 76/28* (2018.01)

(52) Cooperative Patent Classification (CPC):
**H04W 68/00; H04W 76/27; H04W 76/28**

(86) International application number:
**PCT/CN2024/074714**

(87) International publication number:
**WO 2024/164884 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.02.2023 CN 202310127532**

(71) Applicant: **Huawei Technologies Co., Ltd.
Shenzhen, Guangdong 518129 (CN)**

(72) Inventors:
• **XIANG, Hongyu
Shenzhen, Guangdong 518129 (CN)**
• **CHEN, Lei
Shenzhen, Guangdong 518129 (CN)**
• **LI, Chenwan
Shenzhen, Guangdong 518129 (CN)**
• **SHI, Yulong
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **PAGING METHOD, AND APPARATUS**

(57)    This application provides a paging method and an apparatus. The paging method includes: A terminal device receives extended discontinuous reception eDRX configuration information of a first type and eDRX configuration information of a second type, where the eDRX configuration information of the first type includes a first eDRX cycle, the eDRX configuration information of the second type includes a second eDRX cycle, the first eDRX cycle is greater than a first cycle threshold, and the second eDRX cycle is less than or equal to the first cycle threshold; and the terminal device determines, based on a category of an access network device of a cell in which the terminal device is located, to monitor a paging message by using the eDRX configuration information of the first type or monitor a paging message by using the eDRX configuration information of the second type. According to this application, an evolved eDRX technology can be compatible with an eDRX technology existing before evolution, thereby improving a paging success rate.

FIG. 3a

**Description**

This application claims priority to Chinese Patent Application No. 202310127532.0, filed with the China National Intellectual Property Administration on February 10, 2023 and entitled "PAGING METHOD AND APPARATUS", which is incorporated herein by reference in its entirety.

**TECHNICAL FIELD**

This application relates to the field of communication technologies, and in particular, to a paging method and an apparatus.

**BACKGROUND**

In a communication system, an access network device sends a paging message to a terminal device, to notify the terminal device in an idle state or an inactive INACTIVE state to create a service, or notify the terminal device that a system message changes and the terminal device needs to read a changed system broadcast message again, or notify the terminal device to receive earthquake and tsunami warning system (Earthquake and Tsunami Warning System, ETWS) information, or the like. Correspondingly, the terminal device needs to monitor the paging message. To reduce power consumption of the terminal device, a discontinuous reception (discontinuous reception, DRX) mechanism is introduced to control behavior of monitoring the paging message by the terminal device. To be specific, the terminal device may wake up based on a DRX cycle to monitor the paging message. With evolution of technologies, to keep the terminal device in a sleep state for a longer time, so as to further reduce power consumption, an extended DRX (extended DRX, eDRX) technology is proposed to prolong the DRX cycle. The DRX cycle in the eDRX technology is referred to as an eDRX cycle. With continuous evolution of the eDRX technology, the eDRX cycle is continuously prolonged. In a continuous evolution process of the eDRX technology, an access network device that supports paging in a longer eDRX cycle continuously emerges in a network. However, an access network device that supports only a shorter eDRX cycle before evolution also exists in the network. The terminal device continuously moves, and may move from a cell served by the access network device that supports paging in the longer eDRX cycle to a cell served by the access network device that supports only the shorter eDRX cycle, resulting in a paging failure. Therefore, how to improve a paging success rate of the terminal device in the continuous evolution process of the eDRX technology is an urgent problem to be resolved.

**SUMMARY**

This application provides a paging method and an apparatus, to improve a paging success rate of a terminal device in a continuous evolution process of an eDRX technology.

According to a first aspect, an embodiment of this application provides a paging method. The method may be performed by a terminal device, or may be performed by a component (such as a processor, a chip, or a chip system) of the terminal device. The paging method may include:

   the terminal device receives extended discontinuous reception eDRX configuration information of a first type and eDRX configuration information of a second type, where the eDRX configuration information of the first type includes a first eDRX cycle, the eDRX configuration information of the second type includes a second eDRX cycle, the first eDRX cycle is greater than a first cycle threshold, and the second eDRX cycle is less than or equal to the first cycle threshold; and

   the terminal device determines, based on a category of an access network device of a cell in which the terminal device is located, to monitor a paging message by using the eDRX configuration information of the first type or monitor a paging message by using the eDRX configuration information of the second type, where the category of the access network device is determined based on at least whether the access network device supports use of an eDRX cycle greater than the first cycle threshold for paging.

Through implementation of the method described in the first aspect, two types of eDRX configuration information are configured for the terminal device, which are respectively the eDRX configuration information of the first type and the eDRX configuration information of the second type. The eDRX configuration information of the first type includes the first eDRX cycle greater than the first cycle threshold, and the eDRX configuration information of the second type includes the eDRX cycle less than or equal to the first cycle threshold. The terminal device may determine, based on the category of the access network device of the cell in which the terminal device is located, to monitor the paging message by using the eDRX configuration information of the first type or the eDRX configuration information of the second type. According to the method in this application, even if there are access network devices of different categories in a network, the terminal device can determine, based on the access network devices of different categories, eDRX configuration information of a corresponding type to monitor the paging message. Therefore, in a continuous evolution process of an eDRX technology, when access network devices of different categories emerge in the network (the category may be determined based on whether the access network device supports use of an eDRX cycle greater than the first cycle threshold for paging), a paging message monitoring success rate is improved. In addition, in a scenario in which the access network device of the cell in which the terminal device is located does not support use of an eDRX cycle greater than the first cycle threshold for paging, the terminal device falls back to the eDRX configuration of the second type. Compared with fallback to DRX, this can prevent the terminal device from frequently waking up, so that power consumption is reduced.

In a possible implementation, that the terminal device determines, based on the category of the access network device of the cell in which the terminal device is located, to monitor the paging message by using the eDRX configuration information of the first type or monitor the paging message by using the eDRX configuration information of the second type includes:

if the category of the access network device of the cell in which the terminal device is located is a first category, the terminal device monitors the paging message based on the eDRX configuration information of the first type, where the access network device of the first category supports use of an eDRX cycle greater than the first cycle threshold for paging; or
if the category of the access network device of the cell in which the terminal device is located is a second category, the terminal device monitors the paging message based on the eDRX configuration information of the second type, where the access network device of the second category does not support use of an eDRX cycle greater than the first cycle threshold for paging.

In this implementation, if the access network device of the cell in which the terminal device is located supports use of an eDRX cycle greater than the first cycle threshold for paging, the terminal device monitors the paging message based on the eDRX configuration information of the first type. Because the first eDRX cycle included in the eDRX configuration information of the first type is greater than the first cycle threshold, power consumption of the terminal device can be reduced to a maximum extent. If the access network device of the cell in which the terminal device is located does not support use of an eDRX cycle greater than the first cycle threshold for paging, the terminal device monitors the paging message based on the eDRX configuration information of the second type, thereby improving a paging message monitoring success rate.

In a possible implementation, the access network device of the second category supports use of an eDRX cycle less than or equal to the first cycle threshold for paging.

In this implementation, the access network device of the second category supports use of an eDRX cycle less than or equal to the first cycle threshold for paging. In this case, the terminal device is enabled to fall back to use the eDRX configuration information of the second type to monitor the paging message, instead of enabling the terminal device to fall back to use DRX configuration information to monitor the paging message. Therefore, power consumption of the terminal device can be reduced while a paging message monitoring success rate is improved.

In a possible implementation, the eDRX configuration information of the first type and the eDRX configuration information of the second type are carried in a radio resource control (Radio Resource Control, RRC) connection release message.

In this implementation, when an RRC connection of the terminal device is released, two types of eDRX configuration information are configured for the terminal device, so that the terminal device can subsequently select, based on the category of the access network device of the cell in which the terminal device is located, eDRX configuration information of a corresponding type to monitor a paging message, thereby improving a paging message monitoring success rate.

According to a second aspect, an embodiment of this application provides a paging method. The method may be performed by a first access network device, or may be performed by a component (such as a processor, a chip, or a chip system) of the first access network device. The paging method may include: The first access network device sends extended discontinuous reception eDRX configuration information of a first type and eDRX configuration information of a second type to a terminal device, where the eDRX configuration information of the first type includes a first eDRX cycle, the eDRX configuration information of the second type includes a second eDRX cycle, the first eDRX cycle is greater than a first cycle threshold, and the second eDRX cycle is less than or equal to the first cycle threshold.

Through implementation of the method described in the second aspect, the first access network device configures two types of eDRX configuration information for the terminal device, so that the terminal device can determine, based on a category of an access network device of a cell in which the terminal device is located, to monitor a paging message by using the eDRX configuration information of the first type or the eDRX configuration information of the second type, thereby improving a paging message monitoring success rate.

In a possible implementation, the first access network device sends a first paging message to a second access network device, where the first paging message includes an identifier of the terminal device, the eDRX configuration information of the first type, and the eDRX configuration information of the second type.

In this implementation, the first access network device sends the eDRX configuration information of the first type and the eDRX configuration information of the second type to the second access network device, so that the second access network device sends a paging message for the terminal device by using the first eDRX configuration information or the eDRX configuration information of the second type, thereby improving a paging success rate.

In a possible implementation, the second access network device is an access network device of a first category or an access network device of a second category, the access network device of the first category supports use of an eDRX cycle greater than the first cycle threshold for paging, the access network device of the second category does not support use of an eDRX cycle greater than the first cycle threshold for paging, and the access network device of the second category supports use of an eDRX cycle less than or equal to the first cycle threshold for paging.

In this implementation, the first access network device sends the same eDRX configuration information to the second access network device that supports use of an eDRX cycle greater than the first cycle threshold for paging or the second access network device that does not support use of an eDRX cycle greater than the first cycle threshold for paging, so that the second access network device selectively uses the eDRX configuration information of the first type or the eDRX configuration information of the second type to send a paging message.

In a possible implementation, the method further includes:

the first access network device sends a second paging message to a second access network device of a first category, where the second paging message includes an identifier of the terminal device and the eDRX configuration information of the first type, and the second access network device of the first category supports use of an eDRX cycle greater than the first cycle threshold for paging; and

the first access network device sends a third paging message to a second access network device of a second category, where the third paging message includes the identifier of the terminal device and the eDRX configuration information of the second type, the second access network device of the second category does not support use of an eDRX cycle greater than the first cycle threshold for paging, and the access network device of the second category supports use of an eDRX cycle less than or equal to the first cycle threshold for paging.

In this implementation, the first access network device separately sends different types of eDRX configuration information to second access network devices of different categories in a targeted manner, so that the second access network device sends a paging message by using the received eDRX configuration information.

In a possible implementation, the method further includes:
the first access network device receives capability indication information sent by the second access network device of the first category, where the capability indication information indicates that the corresponding second access network device of the first category supports use of the eDRX cycle greater than the first cycle threshold for paging.

In this implementation, the first access network device may determine, by using the capability indication information sent by the second access network device, that the second access network device supports use of the eDRX cycle greater than the first cycle threshold for paging, so as to send the eDRX configuration information of the first type to the second access network device in a targeted manner.

In a possible implementation, the eDRX configuration information of the first type and the eDRX configuration information of the second type are carried in a radio resource control RRC connection release message.

According to a third aspect, an embodiment of this application provides a paging method. The method may be performed by a second access network device, or may be performed by a component (such as a processor, a chip, or a chip system) of the second access network device. The paging method may include: receiving, by the second access network device, a first paging message sent by a first access network device, where the first paging message includes an identifier of a terminal device, eDRX configuration information of a first type, and eDRX configuration information of a second type, the eDRX configuration information of the first type includes a first eDRX cycle, the eDRX configuration information of the second type includes a second eDRX cycle, the first eDRX cycle is greater than a first cycle threshold, and the second eDRX cycle is less than or equal to the first cycle threshold; and

if a category of the second access network device is a first category, sending a second paging message based on the eDRX configuration information of the first type, where the second paging message includes the identifier of the terminal device; or

if a category of the second access network device is a second category, sending a second paging message based on the eDRX configuration information of the second type, where the second paging message includes the identifier of the terminal device, where

the first category and the second category are determined based on at least whether the second access network device supports use of an eDRX cycle greater than the first cycle threshold for paging.

Through implementation of the method described in the third aspect, when the second access network device receives the first paging message that is sent by the first access network device and that includes the eDRX configuration information of the first type and the eDRX configuration information of the second type, second access network devices of different categories separately send paging messages by using different types of eDRX configuration information, so as to improve a paging success rate when a network includes access network devices of two categories.

In a possible implementation, an access network device of the first category supports use of an eDRX cycle greater than the first cycle threshold for paging, an access network device of the second category does not support use of an eDRX cycle greater than the first cycle threshold for paging, and the access network device of the second category supports use of an eDRX cycle less than or equal to the first cycle threshold for paging.

In this implementation, when a network includes access network devices of two categories, a paging success rate can be improved.

According to a fourth aspect, an embodiment of this application provides a paging method. The method may be performed by a terminal device, or may be performed by a component (such as a processor, a chip, or a chip system) of the terminal device. The paging method may include:

the terminal device receives extended discontinuous reception eDRX configuration information of a first type, where the eDRX configuration information of the first type includes a first eDRX cycle, and the first eDRX cycle is greater than a first cycle threshold; and
if a category of an access network device of a cell in which the terminal device is located is a first category, the terminal device monitors a paging message based on the eDRX configuration information of the first type; or
if a category of an access network device of a cell in which the terminal device is located is a second category, the terminal device receives eDRX configuration information of a second type from the access network device of the cell in which the terminal device is located, and monitors a paging message based on the eDRX configuration information of the second type, where the eDRX configuration information of the second type includes a second eDRX cycle, and the second eDRX cycle is less than or equal to the first cycle threshold, where
the first category and the second category are determined based on at least whether the access network device supports use of an eDRX cycle greater than the first cycle threshold for paging.

Through implementation of the method described in the fourth aspect, the eDRX configuration information of the first type is configured for the terminal device. If the category of the access network device of the cell in which the terminal device is located is the first category, the terminal device monitors the paging message based on the eDRX configuration information of the first type. If the category of the access network device of the cell in which the terminal device is located is the second category, the terminal device needs to receive the eDRX configuration information of the second type from the access network device of the cell in which the terminal device is located, to monitor the paging message based on the eDRX configuration information of the second type. In this manner, an access network device of the first category that supports use of an eDRX cycle greater than the first cycle threshold for paging and an access network device of the second category that does not support use of an eDRX cycle greater than the first cycle threshold for paging are allowed to exist in a network, thereby improving a paging success rate.

In a possible implementation, an access network device of the first category supports use of an eDRX cycle greater than the first cycle threshold for paging, an access network device of the second category does not support use of an eDRX cycle greater than the first cycle threshold for paging, and the access network device of the second category supports use of an eDRX cycle less than or equal to the first cycle threshold for paging.

In a possible implementation, before the terminal device receives the eDRX configuration information of the second type from the access network device of the cell in which the terminal device is located, the method further includes: when the terminal device moves from a cell served by the access network device of the first category to a cell served by the access network device of the second category, the terminal device sends a radio resource control RRC connection resume request to the access network device of the cell in which the terminal device is located.

That the terminal device receives the eDRX configuration information of the second type from the access network device of the cell in which the terminal device is located includes: the terminal device receives an RRC connection release message sent by the access network device of the cell in which the terminal device is located, where the RRC connection release message includes the eDRX configuration information of the second type.

In this implementation, when the terminal device moves from a cell served by the access network device of the first category to a cell served by the access network device of the second category, the terminal device sends an RRC connection resume request to the access network device of the second category. In this way, the access network device of the second category sends the eDRX configuration information of the second type to the terminal device, so that the terminal device monitors a paging message based on the eDRX configuration information of the second type.

According to a fifth aspect, an embodiment of this application provides a paging method. The method may be performed by a first access network device, or may be performed by a component (such as a processor, a chip, or a chip system) of the first access network device. The paging method may include: The first access network device sending extended discontinuous reception eDRX configuration information of a first type to a terminal device, where the eDRX configuration information of the first type includes a first eDRX cycle, and the first eDRX cycle is greater than a first cycle threshold;

the first access network device indicates, to a core network device, that the terminal device monitors a paging message by using the eDRX configuration information of the first type; and
when the first access network device receives a context request sent by a second access network device, the first access network device indicates, to the core network device, that the first eDRX configuration information is updated, where the context request includes an identifier of the terminal device.

Through implementation of the method described in the fifth aspect, after configuring the eDRX configuration information of the first type for the terminal device, the first access network device indicates, to the core network device, that the terminal device monitors the paging message by using the eDRX configuration information of the first type, so that the core network device knows the eDRX configuration information used by the terminal device. Further, when the first access network device receives the context request sent by the second access network device, it indicates that the terminal device has moved to a cell served by the second access network device, and the first access network device indicates, to the core network device, that the first eDRX configuration information is updated, so that the core network device perceives the update of the eDRX configuration information used by the terminal device.

In a possible implementation, the second access network device does not support use of an eDRX cycle greater than the first cycle threshold for paging, and the second access network device supports use of an eDRX cycle less than or equal to the first cycle threshold for paging.

In this implementation, when the terminal device moves to the cell served by the second access network device that does not support use of an eDRX cycle greater than the first cycle threshold for paging but supports use of an eDRX cycle less than or equal to the first cycle threshold for paging, the first access network device indicates, to the core network device, that the first eDRX configuration information is updated, that is, the core network device does not need to buffer data of the terminal device.

In a possible implementation, the method further includes: the first access network device sends a radio resource control RRC connection release message to the second access network device, where the RRC connection release message indicates to release the terminal device to an idle state or an inactive state.

In a possible implementation, if the RRC connection release message indicates to release the terminal device to the inactive state,
the RRC connection release message includes eDRX configuration information of a second type, the eDRX configuration information of the second type includes a second eDRX cycle, and the second eDRX cycle is less than or equal to the first cycle threshold.

In this implementation, the first access network device may configure the eDRX configuration information of the second type for the terminal device, and send the eDRX configuration information of the second type to the terminal device through the second access network device, so that the terminal device monitors, based on the eDRX configuration information of the second type, a paging message sent by the first access network device.

According to a sixth aspect, this application provides a communication apparatus, used in a terminal device, and including:

a transceiver unit, configured to receive extended discontinuous reception eDRX configuration information of a first type and eDRX configuration information of a second type, where the eDRX configuration information of the first type includes a first eDRX cycle, the eDRX configuration information of the second type includes a second eDRX cycle, the first eDRX cycle is greater than a first cycle threshold, and the second eDRX cycle is less than or equal to the first cycle threshold; and
a processing unit, configured to determine, based on a category of an access network device of a cell in which the terminal device is located, to monitor a paging message by using the eDRX configuration information of the first type or monitor a paging message by using the eDRX configuration information of the second type, where the category of the access network device is determined based on at least whether the access network device supports use of an eDRX cycle greater than the first cycle threshold for paging.

In a possible implementation, the processing unit is specifically configured to: if the category of the access network device of the cell in which the terminal device is located is a first category, monitor the paging message based on the eDRX configuration information of the first type, where the access network device of the first category supports use of an eDRX cycle greater than the first cycle threshold for paging; or

if the category of the access network device of the cell in which the terminal device is located is a second category, monitor the paging message based on the eDRX configuration information of the second type, where the access network device of the second category does not support use of an eDRX cycle greater than the first cycle threshold for paging.

In a possible implementation, the access network device of the second category supports use of an eDRX cycle less than or equal to the first cycle threshold for paging.

In a possible implementation, the eDRX configuration information of the first type and the eDRX configuration information of the second type are carried in a radio resource control RRC connection release message.

According to a seventh aspect, this application provides a communication apparatus, used in a first access network device, and including:

a transceiver unit, configured to send extended discontinuous reception eDRX configuration information of a first type and eDRX configuration information of a second type to a terminal device, where the eDRX configuration information of the first type includes a first eDRX cycle, the eDRX configuration information of the second type includes a second eDRX cycle, the first eDRX cycle is greater than a first cycle threshold, and the second eDRX cycle is less than or equal to the first cycle threshold.

In a possible implementation, the transceiver unit is further configured to send a first paging message to a second access network device, where the first paging message includes an identifier of the terminal device, the eDRX configuration information of the first type, and the eDRX configuration information of the second type.

In a possible implementation, the second access network device is an access network device of a first category or an access network device of a second category, the access network device of the first category supports use of an eDRX cycle greater than the first cycle threshold for paging, the access network device of the second category does not support use of an eDRX cycle greater than the first cycle threshold for paging, and the access network device of the second category supports use of an eDRX cycle less than or equal to the first cycle threshold for paging.

In a possible implementation, the transceiver unit is further configured to send a second paging message to a second access network device of a first category, where the second paging message includes an identifier of the terminal device and the eDRX configuration information of the first type, and the second access network device of the first category supports use of an eDRX cycle greater than the first cycle threshold for paging; and

the transceiver unit is further configured to send a third paging message to a second access network device of a second category, where the third paging message includes the identifier of the terminal device and the eDRX configuration information of the second type, the second access network device of the second category does not support use of an eDRX cycle greater than the first cycle threshold for paging, and the access network device of the second category supports use of an eDRX cycle less than or equal to the first cycle threshold for paging.

In a possible implementation, the transceiver unit is further configured to receive capability indication information sent by the second access network device of the first category, where the capability indication information indicates that the corresponding second access network device of the first category supports use of the eDRX cycle greater than the first cycle threshold for paging.

In a possible implementation, the eDRX configuration information of the first type and the eDRX configuration information of the second type are carried in a radio resource control RRC connection release message.

According to an eighth aspect, this application provides a communication apparatus, used in a second access network device, and including:

a transceiver unit, configured to receive a first paging message sent by a first access network device, where the first paging message includes an identifier of a terminal device, eDRX configuration information of a first type, and eDRX configuration information of a second type, the eDRX configuration information of the first type includes a first eDRX cycle, the eDRX configuration information of the second type includes a second eDRX cycle, the first eDRX cycle is greater than a first cycle threshold, and the second eDRX cycle is less than or equal to the first cycle threshold; and
a processing unit, configured to: if a category of the second access network device is a first category, send a second paging message based on the eDRX configuration information of the first type, where the second paging message includes the identifier of the terminal device; or
if a category of the second access network device is a second category, send a second paging message based on the eDRX configuration information of the second type, where the second paging message includes the identifier of the terminal device, where
the first category and the second category are determined based on at least whether the second access network device supports use of an eDRX cycle greater than the first cycle threshold for paging.

In a possible implementation, an access network device of the first category supports use of an eDRX cycle greater than the first cycle threshold for paging, an access network device of the second category does not support use of an eDRX cycle greater than the first cycle threshold for paging, and the access network device of the second category supports use of an eDRX cycle less than or equal to the first cycle threshold for paging.

According to a ninth aspect, this application provides a communication apparatus, used in a terminal device, and including:

a transceiver unit, configured to receive extended discontinuous reception eDRX configuration information of a first type, where the eDRX configuration information of the first type includes a first eDRX cycle, and the first eDRX cycle is greater than a first cycle threshold; and

a processing unit, configured to: if a category of an access network device of a cell in which the terminal device is located is a first category, monitor a paging message based on the eDRX configuration information of the first type; or if a category of an access network device of a cell in which the terminal device is located is a second category, receive eDRX configuration information of a second type from the access network device of the cell in which the terminal device is located, and monitor a paging message based on the eDRX configuration information of the second type, where the eDRX configuration information of the second type includes a second eDRX cycle, and the second eDRX cycle is less than or equal to the first cycle threshold, where

the first category and the second category are determined based on at least whether the access network device supports use of an eDRX cycle greater than the first cycle threshold for paging.

In a possible implementation, an access network device of the first category supports use of an eDRX cycle greater than the first cycle threshold for paging, an access network device of the second category does not support use of an eDRX cycle greater than the first cycle threshold for paging, and the access network device of the second category supports use of an eDRX cycle less than or equal to the first cycle threshold for paging.

In a possible implementation, the transceiver unit is further configured to: when the terminal device moves from a cell served by the access network device of the first category to a cell served by the access network device of the second category, send a radio resource control RRC connection resume request to the access network device of the cell in which the terminal device is located; and

the transceiver unit is specifically configured to receive an RRC connection release message sent by the access network device of the cell in which the terminal device is located, where the RRC connection release message includes the eDRX configuration information of the second type.

According to a tenth aspect, this application provides a communication apparatus, used in a first access network device, and including:

a transceiver unit, configured to send extended discontinuous reception eDRX configuration information of a first type to a terminal device, where the eDRX configuration information of the first type includes a first eDRX cycle, and the first eDRX cycle is greater than a first cycle threshold, where

the transceiver unit is further configured to indicate, to a core network device, that the terminal device monitors a paging message by using the eDRX configuration information of the first type; and

the transceiver unit is further configured to: when the first access network device receives a context request sent by a second access network device, indicate, to the core network device, that the first eDRX configuration information is updated, where the context request includes an identifier of the terminal device.

In a possible implementation, the second access network device does not support use of an eDRX cycle greater than the first cycle threshold for paging, and the second access network device supports use of an eDRX cycle less than or equal to the first cycle threshold for paging.

In a possible implementation, the transceiver unit is further configured to send a radio resource control RRC connection release message to the second access network device, where the RRC connection release message indicates to release the terminal device to an idle state or an inactive state.

In a possible implementation, if the RRC connection release message indicates to release the terminal device to the inactive state,

the RRC connection release message includes eDRX configuration information of a second type, the eDRX configuration information of the second type includes a second eDRX cycle, and the second eDRX cycle is less than or equal to the first cycle threshold.

According to an eleventh aspect, an embodiment of this application provides a communication apparatus. The communication apparatus includes a processor, configured to perform the method according to any possible implementation of the first aspect to the fifth aspect. Alternatively, the processor is configured to execute a program stored in a memory. When the program is executed, the method according to any possible implementation of the first aspect to the fifth aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive a signal or send a signal.

According to a twelfth aspect, an embodiment of this application provides a communication apparatus. The communication apparatus includes a logic circuit and an interface, the logic circuit is coupled to the interface, the interface is configured to receive information, and the logic circuit is configured to perform a processing operation.

According to a thirteenth aspect, an embodiment of this application provides a computer-readable storage medium. The computer-readable storage medium is configured to store a computer program, and when the computer program runs on a computer, the method according to any possible implementation of the first aspect to the fifth aspect is performed.

According to a fourteenth aspect, an embodiment of this application provides a computer program product. The computer program product includes a computer program or computer code. When the computer program product runs on a computer, the method according to any possible implementation of the first aspect to the fifth aspect is performed.

According to a fifteenth aspect, an embodiment of this application provides a computer program. When the computer program runs on a computer, the method according to any possible implementation of the first aspect to the fifth aspect is performed.

According to a sixteenth aspect, an embodiment of this application provides a wireless communication system. The wireless communication system includes an access network device and a terminal device.

For technical effects achieved in the sixth aspect to the sixteenth aspect, refer to the technical effects of the first aspect to the fifth aspect or beneficial effects in the following method embodiments. Details are not described herein again.

**BRIEF DESCRIPTION OF DRAWINGS**

FIG. 1 is a diagram of a paging procedure according to an embodiment of this application;
FIG. 2 is a diagram of a 5G communication system according to an embodiment of this application;
FIG. 3a is a schematic flowchart of a paging method according to an embodiment of this application;
FIG. 3b is an example of a paging method according to an embodiment of this application;
FIG. 4a is a schematic flowchart of another paging method according to an embodiment of this application;
FIG. 4b is an example of another paging method according to an embodiment of this application;
FIG. 5a is a schematic flowchart of another paging method according to an embodiment of this application;
FIG. 5b is an example of another paging method according to an embodiment of this application;
FIG. 6a is a schematic flowchart of another paging method according to an embodiment of this application;
FIG. 6b is an example of another paging method according to an embodiment of this application; and
FIG. 7 to FIG. 9 are diagrams of structures of communication apparatuses according to an embodiment of this application.

**DESCRIPTION OF EMBODIMENTS**

To make the objectives, technical solutions, and advantages of this application clearer, the following further describes this application with reference to the accompanying drawings.

The terms "first", "second", and the like in the specification, claims, and accompanying drawings of this application are used to distinguish between different objects, but are not used to describe a specific sequence. In addition, the terms "include" and "have" and any variations thereof are intended to cover non-exclusive inclusion. For example, a process, method, system, product, or device that includes a series of steps or units is not limited to the listed steps or units, but optionally further includes an unlisted step or unit, or optionally further includes another inherent step or unit for the process, method, product, or device.

The "embodiment" mentioned in this specification means that specific features, structures, or characteristics described with reference to the embodiment may be included in at least one embodiment of this application. Appearance of the phrase at various locations in the specification does not necessarily refer to a same embodiment, or an independent or alternative embodiment mutually exclusive with another embodiment. A person skilled in the art may explicitly and implicitly understand that the embodiments described in this specification may be combined with other embodiments.

In this application, "at least one (piece)" refers to one or more, "a plurality of" refers to two or more, "at least two (pieces)" refers to two, three, or more, and "and/or" is used to describe an association relationship of associated objects, and indicates that three relationships may exist. For example, "A and/or B" may indicate the following three cases: Only A exists, only B exists, and both A and B exist, where A and B may be singular or plural. The character "/" usually indicates an "or" relationship between the associated objects. "At least one of the following items (pieces)" or a similar expression thereof means any combination of these items. For example, at least one of a, b, or c may represent a, b, c, "a and b", "a and c", "b and c", or "a, b, and c".

Before the method in this application is described in detail, some concepts in this application are first briefly described.

1. Paging DRX

Paging (Paging) may be used to notify a terminal device in an idle state or an inactive state INACTIVE state to create a service, or notify a terminal device that a system message changes and the terminal device needs to read a changed system broadcast message again, or notify a terminal device to receive earthquake and tsunami warning system (Earthquake and Tsunami Warning System, ETWS) information. According to initiators of paging messages, paging is classified into core network (Core Network, CN) paging and radio access network (Radio Access Network, RAN) paging, which are respectively initiated by a core network device and an access network device. The CN paging is mainly used to page a terminal device in an idle state, and the RAN paging is used to page a terminal device in an inactive state.

To reduce power consumption for monitoring a paging message, a DRX technology is used. Similarly, based on sources of paging messages, there may be an idle DRX for CN paging (IDLE DRX for CN paging) configuration and an inactive DRX for RAN paging configuration.

An access network device (for example, a gNB) sends a default DRX configuration of a network to a terminal device by using a system information block type 1 (System information block type 1, SIB1).

If the terminal device needs to use a specific idle DRX configuration, the terminal device may negotiate with a core network by using non-access stratum (Non-Access Stratum, NAS) signaling, and the terminal device monitors a paging message by using a cycle T1, to periodically monitor the paging message, where cycle T1 = min {specific DRX cycle configured by CN specific DRX cycle configured by CN, default DRX cycle configured by SIB1 default DRX cycle configured by SIB1}.

If the terminal device needs to use a specific inactive DRX configuration, the access network device (for example, a base station) may provide the specific DRX cycle when releasing the terminal device to the inactive state. Considering potential RRC state non-alignment, the terminal device in the inactive state also needs to use an idle DRX configuration to monitor CN paging. In this case, the terminal device monitors a paging message by using a cycle T2, where cycle T2 = min {specific DRX cycle configured by CN specific DRX cycle configured by CN if configured, default DRX cycle configured by SIB1 default DRX cycle configured by SIB1, specific DRX cycle configured by RAN specific DRX cycle configured by RAN}.

For the terminal device in the inactive state, after the paging DRX cycle T2 is determined, a paging frame (paging frame, PF) and a paging occasion (paging occasion, PO) may be determined based on the foregoing inactive DRX configuration. A formula is as follows:

A subframe (Subframe, SFN) that satisfies the following formula may be used as the PF:

$$(\text{SFN} + \text{PF\_offset}) \bmod T = (T \text{ div } N) * (\text{UE\_ID} \bmod N).$$

An index number i_s indicates an index number corresponding to the PO, and the index number i_s may be determined according to the following formula:

$$i\_s = \text{floor}(\text{UE\_ID}/N) \bmod Ns.$$

PF_offset, N, and Ns are broadcast by using system information, PF_offset represents an offset provided by broadcasting the system information, N is a quantity of PFs included in one paging DRX cycle T, Ns is a quantity of paging occasions, and UE_ID and T are associated with a separate specific configuration of the terminal device.

2. Paging eDRX

To further reduce power consumption, an R17 extended DRX (extended DRX, eDRX) technology may be used to prolong a DRX cycle, so that a terminal device can stay in a sleep state for a longer time. An idle eDRX configuration can extend an eDRX cycle to a maximum of more than three hours, and a concept of paging time window (paging time window, PTW) is introduced. The terminal device needs to monitor CN paging in the PTW. Specifically, the terminal device and a network need to determine a paging hyperframe PH to which the PTW belongs and a frame number corresponding to a start position of the PTW in the paging hyperframe.

An H-SFN that satisfies the following formula may be used as the paging hyperframe:

$$\text{H-SFN mod } T_{eDRX\_CN} = (UE\_ID\_H \text{ mod } T_{eDRX\_CN}).$$

UE_ID_H is 13 most significant bits of a hashed ID. The hashed ID is calculated based on 32 least significant bits of an S-TMSI according to a frame check sequence generation method. An obtained frame check sequence is the hashed ID. $T_{eDRX\_CN}$ is a specific eDRX cycle of the terminal device, and is measured in hyperframes, and a value range is 2, ..., and 1024.

The frame number corresponding to the start position of the PTW in the paging hyperframe PH may be determined according to the following formula:

$$SFN = 128 * i_{eDRX\_CN},$$

where

$$-i_{eDRX\_CN} = floor(UE\_ID\_H/T_{eDRX\_CN}) \text{ mod } 8.$$

It should be noted that when the eDRX cycle is 256 (that is, 2.56s), 512 (that is, 5.12s), and 1024 (that is, 10.24s), the PTW is not used.

For an R17 inactive eDRX configuration, an eDRX cycle configured by the R17 inactive eDRX configuration is not greater than 10.24s, and use of the eDRX cycle is the same as use of the DRX cycle. To be specific, the eDRX cycle may be directly used as T in the foregoing PF/PO determining formula, to determine the PF and the PO. The terminal device wakes up every inactive eDRX cycle to monitor a paging message.

In some embodiments, second eDRX configuration information in embodiments of this application may be an R17 inactive eDRX configuration in which a configured eDRX cycle is less than or equal to 10.24s.

3. Paging in a movement process of a terminal device

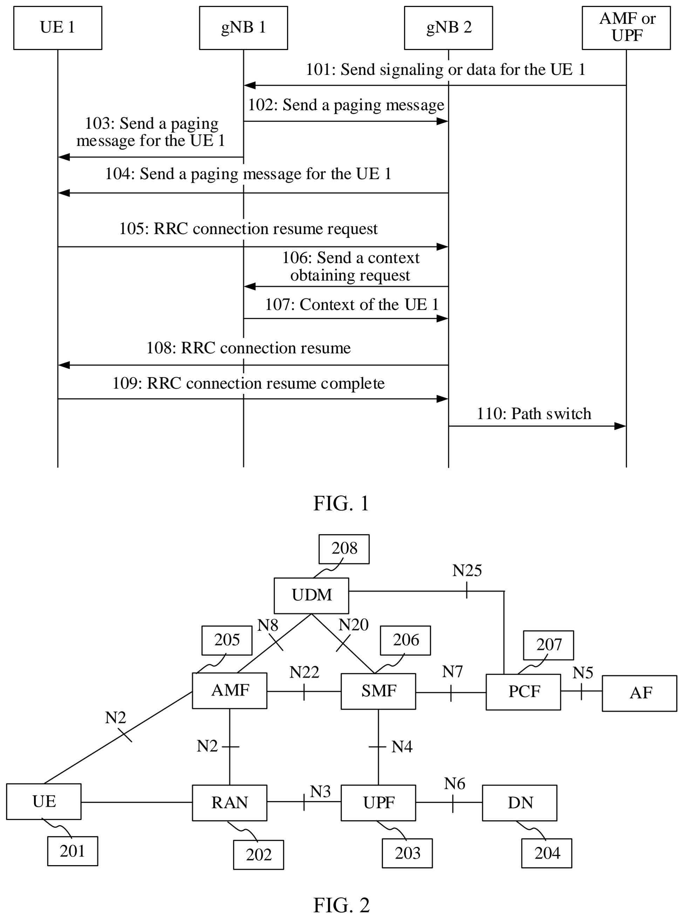

The following describes a paging process in a movement process provided in an embodiment of this application with reference to FIG. 1. In FIG. 1, an example in which a last serving access network device is a gNB 1, an access network device of a cell in which a terminal device is currently located is a gNB 2, and the terminal device is user equipment (User Equipment, UE) is used for description.

101: An AMF or a UPF sends signaling or data for UE 1 to the gNB 1.

The last serving base station gNB 1 of the UE 1 releases the UE 1 to an inactive state and provides an inactive eDRX configuration. Then, the UE 1 moves to another base station gNB 2. Because a core network considers that the UE 1 in the inactive state is still in a CM-CONNECTED state, the signaling and the data are sent to the last serving base station gNB 1 of the UE 1.

102: The gNB 1 sends a paging message.

The gNB 1 notifies another base station in a radio network notification area RNA to initiate paging, and also initiates paging. In FIG. 1, for example, the gNB 1 sends the paging message to the gNB 2.

103: The gNB 1 sends a paging message for the UE 1.

104: The gNB 2 sends a paging message for the UE 1.

105: The UE 1 sends an RRC connection resume request.

If the UE 1 detects, through monitoring, a paging message for the UE 1 and responds to the paging message, in this embodiment, the UE 1 moves to a cell served by the gNB 2, and sends the RRC connection resume request to the gNB 2.

106: The gNB 2 sends a context obtaining request.

The gNB 2 sends the context obtaining request to the last serving base station gNB 1 of the UE 1, where the context obtaining request includes an identifier of the UE 1.

107: The gNB 1 sends a context of the UE 1 to the gNB 2.

108: The gNB 2 sends an RRC connection resume (RRC Resume) message to the UE 1.

109: The UE 1 sends an RRC connection resume complete message.

110: Perform path switch.

It may be understood that, in this embodiment, if the gNB 2 supports the inactive eDRX configuration configured by the gNB 1, the UE 1 may continue to monitor, in the cell served by the gNB 2, a paging message by using the inactive eDRX configuration configured by the gNB 1. For example, the gNB 2 indicates capability support information by broadcasting eDRX-AllowedInactive-r17, to indicate that the current cell supports performing RAN paging for the UE 1 in the inactive state by using an eDRX cycle less than or equal to 10.24s. If the gNB 2 does not support the inactive eDRX configuration configured by the gNB 1, the UE 1 needs to stop monitoring a paging message by using the inactive eDRX configuration (for example, an eDRX cycle of 10.24s) configured by the gNB 1, for example, fall back to a DRX configuration (for example, a DRX cycle of 1.28s) to monitor a paging message.

4. Inactive eDRX configuration greater than 10.24s

To further reduce power consumption, a potential method is to further prolong an inactive eDRX cycle, that is, further prolong the inactive eDRX cycle to exceeding 10.24s, and introduce a PTW window by simulating an idle eDRX configuration, so that a terminal device can stay in a sleep state for a longer time. The first eDRX configuration information in embodiments of this application may be an inactive eDRX configuration in which a configured eDRX cycle is greater than 10.24s.

In this case, to avoid that an excessively long sleep time causes excessive buffered data of terminal devices accumulated at an access network device (for example, a gNB), the data may be buffered at a user plane function (UPF, User Plane Function, UPF). Specifically, before sending an inactive eDRX configuration to the terminal device, the access network device (for example, the gNB) needs to notify a core network of related information (for example, the inactive eDRX configuration, including an inactive eDRX cycle and a PTW length), so that the core network learns of time at which the terminal device wakes up next time to monitor a paging message. The core network may determine a buffer time length based on the time at which the terminal device wakes up next time to monitor the paging message, for example, perform buffering until the time at which the terminal device wakes up next time to monitor the paging message, and then data is sent to the access network device (for example, the gNB), so that the access network device (for example, the gNB) does not need to buffer buffered data for an excessively long time.

After buffer time expires, if there is data or signaling that needs to be sent to the terminal device, the core network may send a message to the access network device through an N2 interface, to start paging by the access network device. The terminal device resumes an RRC connection in response to the paging, and notifies the UPF to release a buffer, to transmit the data or the signaling.

It should be noted that, for ease of description, an eDRX configuration whose eDRX cycle is greater than 10.24s may be referred to as a long inactive eDRX configuration for short in this application. It may be understood that the name may alternatively be another name. This is not limited in this application. The second eDRX configuration information in embodiments of this application may be the long inactive eDRX configuration.

For an access network device (for example, a gNB) that supports the long inactive eDRX configuration greater than 10.24s, indication information may be sent to indicate that the access network device (for example, the gNB or a cell) supports sending of a paging message in an eDRX cycle greater than 10.24s. For example, an added IE is broadcast by using a SIB1. For example, the added IE is longeDRX-AllowedInactive-r18, and the added IE indicates that the access network device (for example, the gNB or the cell) supports use of the long inactive eDRX configuration greater than 10.24s for paging a terminal device in an inactive state.

Technical solutions in embodiments of this application may be applied to various communication systems, for example, a long term evolution (long term evolution, LTE) system, a universal mobile telecommunications system (universal mobile telecommunications system, UMTS), a 5th generation (5th generation, 5G) system, a new radio (new radio, NR) system, and another new system emerging with development of technologies.

FIG. 2 is a diagram of a 5G communication system according to an embodiment of this application. As shown in FIG. 2, the system may be divided into two parts: an access network and a core network.

The access network is configured to implement functions related to radio access, and mainly includes a radio access network (Radio Access Network, RAN) device 202. The core network mainly includes the following several key logical network elements: a user plane function (user plane function, UPF) 203, an access and mobility management function (access and mobility management function, AMF) 205, a session management function (session management function, SMF) 206, a policy control function (policy control function, PCF) 207, and a unified data management (unified data management, UDM) function 208. The system may further include user equipment (user equipment, UE) 201, a data network (data network, DN) 204, and an application function (application function, AF). Interfaces between the network elements are shown in FIG. 2. It should be understood that the network elements may alternatively communicate with each other through a service-oriented interface.

The UE may also be referred to as a terminal device. The terminal device may communicate with one or more core networks (core network, CN) via the RAN device. The terminal device may be referred to as an access terminal, a terminal, a subscriber unit, a subscriber station, a mobile station, a remote station, a remote terminal, a mobile device, a user terminal, a wireless network device, a user agent, or a user apparatus. The terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another device connected to a wireless modem, a vehicle-mounted device, a wearable device, a terminal device in an internet of things or an internet of vehicles, a terminal device in any form in a future network, or the like.

The RAN device is a device that connects a terminal device to a wireless network, and may be specifically a base station. There may be various forms of base stations, for example, a macro base station, a micro base station (also referred to as a small cell), a relay station, and an access point. The base station may be specifically an access point (access point, AP) in a wireless local area network (wireless local area network, WLAN), a base transceiver station (base transceiver station, BTS) in a global system for mobile communications (global system for mobile communications, GSM) or code division multiple access (code division multiple access, CDMA), a NodeB (NodeB, NB) in wideband code division multiple access (wideband code division multiple access, WCDMA), an evolved NodeB (Evolved NodeB, eNB or eNodeB), a relay station, or an access point in LTE, a vehicle-mounted device, a wearable device, a next generation NodeB (the next generation NodeB, gNB) in a 5G system, a base station in a future evolved public land mobile network (public land mobile network, PLMN), or the like.

The UDM has functions such as user subscription data management and generation of user authentication information.

The AMF is mainly responsible for functions such as UE registration management, UE connection management, UE reachability management, UE access authorization and access authentication, UE security functionality, UE mobility management, network slice (network slice) selection, and SMF selection. The AMF serves as an anchor of an N1/N2 interface signaling connection, provides the SMF with routing of an N1/N2 interface session management (session management, SM) message, and maintains and manages state information of the UE. The AMF is a mobility management network element in a 5G system.

The SMF is mainly responsible for all control plane functions in session management of the UE, including UPF selection and control, internet protocol (internet protocol, IP) address assignment and management, quality of service (quality of service, QoS) management of a session, and obtaining of a policy and charging control (policy and charging control, PCC) policy from the PCF. The SMF further serves as a termination of an SM part in a non-access stratum (non-access stratum, NAS) message.

The PCF has functions such as providing policy rules for control plane functional entities.

The AF may be an application server, and may belong to an operator or a third party.

The UPF is mainly responsible for processing a user packet, for example, forwarding and charging. The UPF may serve as an anchor of a protocol data unit (protocol data unit, PDU) session (session) connection, namely, a PDU session anchor (PDU session anchor, PSA), and is responsible for data packet filtering, data transmission/forwarding, rate control, charging information generation, user plane QoS handling, uplink transmission authentication, transmission class verification, downlink data packet buffering, downlink data notification triggering, and the like of the UE. The UPF may further serve as a branch point of a multi-homed (multi-homed) PDU session.

The DN is a network that provides a user with a data transmission service, for example, an IP multimedia service (IP Multimedia service, IMS) or the Internet. The DN may include an application server (application server, AS). The AS is a software framework, provides an environment in which an application program runs, and is configured to provide the application program with services such as security, data, transaction support, load balancing, and large-scale distributed system management. The UE communicates with the AS to obtain an application packet. It should be noted that the AF is a control plane of the AS.

It should be understood that embodiments of this application are not limited to being applied to only the system architecture shown in FIG. 2. For example, a communication system to which the paging method in embodiments of this application may be applied may include more or fewer network elements or devices. The devices or the network elements in FIG. 2 may be hardware, or may be software obtained through function division or a combination of the hardware and the software. The devices or the network elements in FIG. 2 may communicate with each other through another device or network element.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

The terminal device described in embodiments of this application may be user equipment (user equipment, UE), an access terminal, a UE unit, a UE station, a mobile station, a remote station, a remote terminal, a mobile device, a UE terminal, a terminal, a wireless communication device, a multimedia device, a streaming media device, a UE agent, a UE apparatus, or the like. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a future 5G network, a terminal in a future evolved public land mobile network (public land mobile network, PLMN), or the like.

The access network device described in embodiments of this application is a device that can communicate with a terminal device, and may be a base station, a relay station, or an access point. The base station may be a base transceiver station (base transceiver station, BTS) in a global system for mobile communications (global system for mobile communications, GSM) or a code division multiple access (code division multiple access, CDMA) network, may be a node base station (node base station, NB) in wideband code division multiple access (wideband code division multiple access, WCDMA), may be an evolved (evolved) NB (eNB or eNodeB) in long term evolution (long term evolution, LTE), may be a radio controller in a cloud radio access network (cloud radio access network, CRAN) scenario, may be a base station device in a future 5G network or an access network device in a future evolved PLMN, or may be a wearable device or a vehicle-mounted device.

The core network device described in embodiments of this application corresponds to different devices in different systems, for example, may correspond to a serving general packet radio service (general packet radio service, GPRS) support node (serving GPRS support node, SGSN) and/or a gateway GPRS support node (gateway GPRS Support Node, GGSN) in 3G; may correspond to a mobility management entity (mobility management entity, MME) and/or a serving gateway (serving gateway, S-GW) in 4G; and may correspond to an access and mobility management function (AMF), a session management function (SMF), or a user plane function (UPF) in 5G.

The following describes embodiments of paging methods in this application by using examples. It should be noted that technical solutions (or referred to as embodiments) in this application may be independently implemented or may be implemented in combination based on some internal relationships. This is not limited in this application. In addition, various terms and definitions in embodiments may be mutually referenced. In each embodiment of this application, different implementations may be implemented in combination or may be implemented independently.

Before procedure embodiments of the paging methods in this application are described, eDRX configuration information of a first type and eDRX configuration information of a second type that are mentioned in embodiments of this application are first described. The eDRX configuration information of the first type includes a first eDRX cycle, the eDRX configuration information of the second type includes a second eDRX cycle, the first eDRX cycle is greater than a first cycle threshold, and the second eDRX cycle is less than or equal to the first cycle threshold. For example, the first cycle threshold may be 10.24s. Further, the second eDRX cycle is greater than or equal to 2.56s. Further, the eDRX configuration information of the first type may further include paging time window (paging time window, PTW) configuration information.

For example, the eDRX configuration information of the first type may mean an inactive eDRX configuration greater than 10.24s, and may be referred to as a long inactive eDRX configuration for short in some scenarios. The eDRX configuration information of the second type may mean an inactive eDRX configuration less than or equal to 10.24s, and may be referred to as an R17 inactive eDRX configuration for short in some scenarios. In some scenarios, both the eDRX configuration information of the first type and the eDRX configuration information of the second type may be inactive eDRX configuration information.

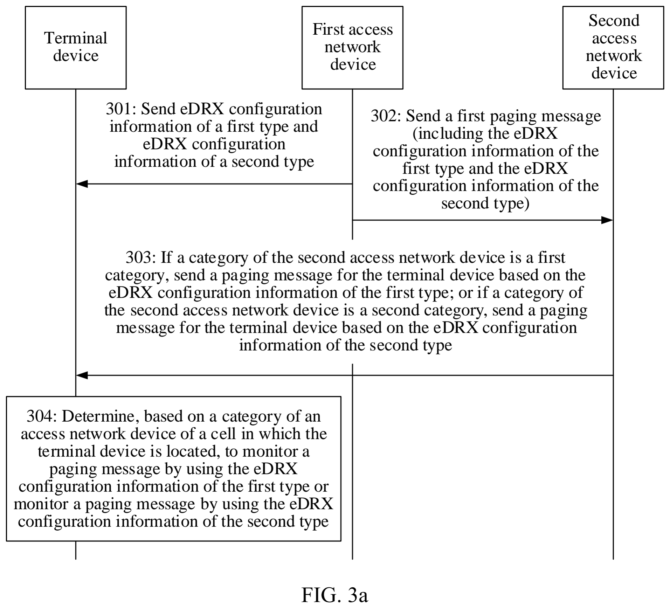

FIG. 3a is a schematic flowchart of a paging method according to an embodiment of this application. FIG. 2 may be a diagram of a system architecture to which the paging method is applicable. In FIG. 3a, a first access network device configures two types of eDRX configuration information for a terminal device, and sends the two types of eDRX configuration information to a second access network device. As shown in FIG. 3a, the method may include 301 to 304. An execution sequence of the steps is not limited in this embodiment of this application. As shown in FIG. 3a, the paging method in this embodiment of this application includes but is not limited to the following steps.

301: The first access network device sends eDRX configuration information of a first type and eDRX configuration information of a second type to the terminal device.

In some embodiments, the first access network device may send the eDRX configuration information of the first type and the eDRX configuration information of the second type to the terminal device by using an RRC connection release message, where the RRC connection release message is used to release the terminal device to an inactive INACTIVE state.

For example, the RRC connection release message includes a field SuspendConfig, an information element (information element, IE) may be added to an extension field of the field SuspendConfig, and the added IE is used to carry the eDRX configuration information of the first type. The eDRX configuration information of the first type includes a first eDRX cycle (which may be denoted as ran-LongExtendedPagingCycle-r18, and has a value greater than 10.24s) and a PTW length that are used by the terminal device to monitor a paging message.

An element ran-ExtendedPagingCycle-r17 of the field SuspendConfig is used to carry a second eDRX cycle in the eDRX configuration information of the second type, and the element ran-ExtendedPagingCycle-r17 may be assigned 10.24s or another value (for example, 2.56s or 5.12s).

In some embodiments, the first access network device notifies a core network device of the eDRX configuration information of the first type, so that the core network device buffers downlink data of the terminal device.

302: The first access network device sends a first paging message to the second access network device, where the first paging message includes the eDRX configuration information of the first type and the eDRX configuration information of the second type.

When the terminal device needs to be paged, the first access network device sends the first paging message to the second access network device in a radio notification area (radio notification area, RNA). The first paging message includes the eDRX configuration information of the first type and the eDRX configuration information of the second type. It may be understood that the first access network device may also send a paging message to the terminal device.

The second access network device may be an access network device of a first category or an access network device of a second category. The access network device of the first category supports use of an eDRX cycle greater than a first cycle threshold for paging. In some embodiments, the access network device of the first category may also compatibly support use of an eDRX cycle less than or equal to the first cycle threshold for paging. The access network device of the second category does not support use of an eDRX cycle greater than the first cycle threshold for paging, but the access network device of the second category supports use of an eDRX cycle less than or equal to the first cycle threshold for paging.

In some embodiments, the access network device of the first category may broadcast first capability indication information, where the first capability indication information indicates that the access network device supports use of the eDRX cycle greater than the first cycle threshold for paging. For example, the first capability indication information may be longeDRX-AllowedInactive-r18, and the access network device of the first category may be an R18 base station.

The access network device of the second category may broadcast second capability indication information, where the second capability indication information indicates that the access network device supports use of the eDRX cycle less than or equal to the first cycle threshold for paging. For example, the second capability indication information may be eDRX-AllowedInactive-r17, and the access network device of the second category may be an R17 base station.

In some embodiments, if the R18 base station does not broadcast longeDRX-AllowedInactive-r18 (that is, the first capability indication information), but broadcasts eDRX-AllowedInactive-r17, the R18 base station may also be classified as an access network device of the second category. In other words, the access network device of the second category may alternatively be the R18 base station that does not broadcast longeDRX-AllowedInactive-r18 (that is, the first capability indication information).

It may be understood that the first access network device in this embodiment of this application may be an access network device of the first category. For example, the first access network device may be an R18 base station that broadcasts longeDRX-AllowedInactive-r18 (that is, the first capability indication information). The first access network device may configure the eDRX configuration information of the first type and the eDRX configuration information of the second type.

It should be noted that the foregoing category classification of the access network device is also applicable to another embodiment of this application.

In some embodiments, there may be one or more second access network devices in the RNA. Further, in an implementation, all second access network devices in the RNA may be access network devices of the first category. In another implementation, all second access network devices in the RNA may be access network devices of the second category. In another implementation, the RNA may include a second access network device of the first category and an access network device of the second category.

In some embodiments, the first paging message sent by the first access network device to the second access network device may be a radio access network paging RAN paging message. An IE may be added to the RAN paging message to carry the eDRX configuration information of the first type. For example, the added IE carries the first eDRX cycle and the corresponding PTW length. For example, the added IE may be NR paging long eDRX information for RRC INACTIVE-r18. An assigned criticality of the added IE may be set to ignore.

An existing IE (that is, NR paging eDRX information for RRC INACTIVE) in the RAN paging message may be used to carry the eDRX configuration information of the second type. For example, the existing IE is assigned 10.24s or another value (2.56s or 5.12s).

303: If a category of the second access network device is the first category, send a paging message for the terminal device based on the eDRX configuration information of the first type; or if a category of the second access network device is the second category, send a paging message for the terminal device based on the eDRX configuration information of the second type.

The second access network device receives the first paging message sent by the first access network device, and further sends a paging message to page the terminal device.

For example, if the category of the second access network device is the first category, that is, the second access network device supports use of an eDRX cycle greater than the first cycle threshold for paging, the second access network device sends the paging message for the terminal device based on the eDRX configuration information of the first type, that is, the eDRX configuration information of the first type takes effect, and the second access network device does not consider the eDRX configuration information of the second type.

For example, if the category of the second access network device is the second category, that is, the second access network device supports use of an eDRX cycle less than or equal to the first cycle threshold for paging, but does not support use of an eDRX cycle greater than the first cycle threshold for paging, the second access network device sends the paging message for the terminal device based on the eDRX configuration information of the second type. In this embodiment, the second access network device of the second category cannot identify an IE that carries the eDRX configuration information of the first type.

304: The terminal device determines, based on a category of an access network device of a cell in which the terminal device is located, to monitor a paging message by using the eDRX configuration information of the first type or monitor a paging message by using the eDRX configuration information of the second type.

The terminal device determines the category of the access network device of the cell in which the terminal device is located. Specifically, optionally, the terminal device may determine, by receiving capability indication information sent by the access network device, the category of the access network device of the cell in which the terminal device is located.

For example, if the terminal device receives the first capability indication information, the terminal device determines that the category of the access network device of the cell in which the terminal device is located is the first category, where the first capability indication information indicates that the access network device supports use of an eDRX cycle greater than the first cycle threshold for paging. The first capability indication information may be longeDRX-AllowedInactive-r18. In some embodiments, the access network device of the first category that supports use of the eDRX cycle greater than the first cycle threshold for paging may also support use of an eDRX cycle less than or equal to the first cycle threshold for paging.

For another example, if the terminal device receives the second capability indication information, the terminal device determines that the category of the access network device of the cell in which the terminal device is located is the second category, where the second capability indication information indicates that the access network device supports use of an eDRX cycle less than or equal to the first cycle threshold for paging, but does not support use of an eDRX cycle greater than the first cycle threshold for paging. The second capability indication information may be eDRX-AllowedInactive-r17.

In some embodiments, if the access network device of the cell in which the terminal device is located is of the first category, the access network device may also support use of an eDRX cycle less than or equal to the first cycle threshold for paging. Therefore, the access network device may also send the second capability indication information. Correspondingly, the terminal device receives the first capability indication information and the second capability indication information. In such a scenario in which both the first capability indication information and the second capability indication information are received, it may be determined that the category of the access network device of the cell in which the terminal device is located is the first category.

In some implementations, if the access network device sends the first capability indication information, it may be determined that the access network device not only supports use of the eDRX configuration information of the first type for paging, but also supports use of the eDRX configuration information of the second type for paging, that is, not only supports use of an eDRX cycle greater than the first cycle threshold for paging, but also supports use of an eDRX cycle less than or equal to the first cycle threshold for paging. In some other implementations, the access network device needs to separately indicate, by using different capability indication information, whether the access network device supports use of corresponding eDRX configuration information for paging. For example, if the access network device sends the first capability indication information, it only indicates that the access network device supports use of the eDRX configuration information of the first type for paging. If the access network device further supports use of the eDRX configuration information of the second type for paging, the access network device further needs to send the second capability indication information.

The terminal device determines, based on the category of the access network device of the cell in which the terminal device is located, to monitor the paging message by using the eDRX configuration information of the first type or monitor the paging message by using the eDRX configuration information of the second type. For example, if the category of the access network device of the cell in which the terminal device is located is the first category, that is, the access network device of the cell in which the terminal device is located supports use of an eDRX cycle greater than the first cycle threshold for paging, the terminal device monitors the paging message by using the eDRX configuration information of the first type, that is, the eDRX configuration information of the first type takes effect. Otherwise, the terminal device monitors the paging message by using the eDRX configuration information of the second type. That is, if the category of the access network device of the cell in which the terminal device is located is not the first category (for example, is the second category), the terminal device monitors the paging message by using the eDRX configuration information of the second type.

In some embodiments, before configuring eDRX configuration information for the terminal device, the first access network device may also perform capability exchange with the terminal device. For example, the terminal device may send third capability indication information to indicate that the terminal device supports use of the eDRX configuration information of the first type for paging. The terminal device may send fourth capability indication information to indicate that the terminal device supports use of the eDRX configuration information of the second type for paging. The fourth indication information may be extendedDRX-CycleInactive-r17, and the third capability indication information may be a new capability indication.

In an implementation, if the terminal device supports use of the eDRX configuration information of the first type for paging, the terminal device definitely supports use of the eDRX configuration information of the second type for paging. In this case, the terminal device sends the third capability indication information to indicate that the terminal device supports both use of the eDRX configuration information of the first type for paging and use of the eDRX configuration information of the second type for paging.

In another implementation, the terminal device needs to separately indicate, by using different capability indication information, whether the terminal device supports corresponding eDRX configuration information. For example, if the terminal device sends the third capability indication information, it only indicates that the terminal device supports use of the eDRX configuration information of the first type for paging. If the terminal device further supports use of the eDRX configuration information of the second type for paging, the terminal device further needs to send the fourth capability indication information.

Correspondingly, the first access network device may configure eDRX configuration information for the terminal device based on the capability indication information reported by the terminal device. In this embodiment of this application, the terminal device supports both use of the eDRX configuration information of the first type for paging and use of the eDRX configuration information of the second type for paging. Therefore, the first access network device configures the eDRX configuration information of the first type and the eDRX configuration information of the second type for the terminal device.

In this embodiment of this application, the first access network device configures two types of eDRX configuration information for the terminal device, so that the terminal device can be paged in a cell served by an access network device of any category, thereby improving a paging success rate. In addition, if the access network device of the cell in which the terminal device is located does not support use of an eDRX cycle greater than the first cycle threshold for paging, the terminal device falls back to the eDRX configuration of the second type. Compared with fallback to DRX, this can prevent the terminal device from frequently waking up, so that power consumption is reduced.

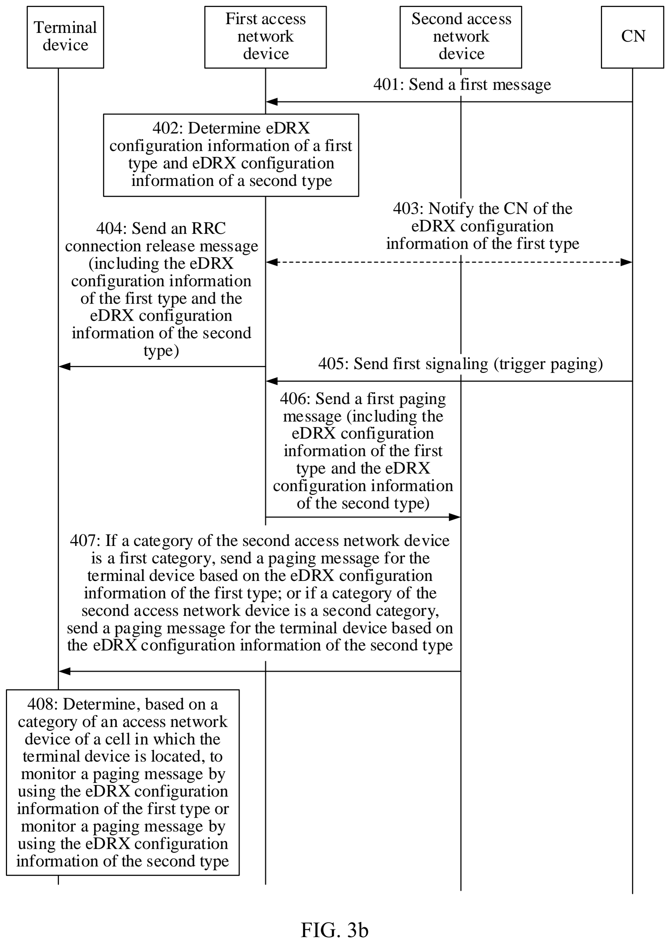

FIG. 3b is an example of a paging method according to an embodiment of this application. FIG. 3b is a more detailed example of the paging method shown in FIG. 3a. As shown in FIG. 3b, the method may include 401 to 408. An execution sequence of the steps is not limited in this embodiment of this application. As shown in FIG. 3b, the paging method in this embodiment of this application includes but is not limited to the following steps.

401: A CN sends a first message to a first access network device.

The first message carries core network assistance information for RRC INACTIVE (Core Network Assistance Information for RRC INACTIVE). For example, the first message sent by the CN may be an initial context setup request message, a terminal device context modification request message, a handover request message, or a path switch request.

402: The first access network device determines eDRX configuration information of a first type and eDRX configuration information of a second type.

The first access network device may be an access network device that supports use of an eDRX cycle greater than or equal to a first cycle threshold for paging. In other words, the first access network device is an access network device of a first category. In some implementations, the first access network device also supports use of an eDRX cycle less than or equal to the first cycle threshold for paging.

The first access network device determines the eDRX configuration information of the first type and/or the eDRX configuration information of the second type based on the core network assistance information for RRC INACTIVE in the first message, that is, configures the eDRX configuration information of the first type and/or the eDRX configuration information of the second type for a terminal device.

403: The first access network device notifies the CN of the eDRX configuration information of the first type.

The first access network device notifies the CN of the eDRX configuration information of the first type, so that the CN determines to buffer data of the terminal device.

404: The first access network device sends an RRC connection release message to the terminal device, where the RRC connection release message includes the eDRX configuration information of the first type and the eDRX configuration information of the second type.

For example, the RRC connection release message includes a field SuspendConfig, an information element (information element, IE) may be added to an extension field of the field SuspendConfig, and the added IE is used to carry the eDRX configuration information of the first type. The eDRX configuration information of the first type includes a first eDRX cycle (which may be denoted as ran-LongExtendedPagingCycle-r18, and has a value greater than 10.24s) and a PTW length that are used by the terminal device to monitor a paging message.

An element ran-ExtendedPagingCycle-r17 of the field SuspendConfig is used to carry a second eDRX cycle in the eDRX configuration information of the second type, and the element ran-ExtendedPagingCycle-r17 may be assigned 10.24s or another value (for example, 2.56s or 5.12s).

405: The CN sends first signaling, where the first signaling is used to trigger access network paging RAN paging.

For example, when there is downlink data of the terminal device, the CN sends the first signaling to the first access network device, where the first signaling indicates to page the terminal device.

406: The first access network device sends a first paging message to a second access network device, where the first paging message includes the eDRX configuration information of the first type and the eDRX configuration information of the second type.

For example, the first access network device sends the first paging message to all second access network devices in an RNA. The first paging message may be a RAN paging message, and the RAN paging message includes the eDRX configuration information of the first type and the eDRX configuration information of the second type.

For example, an IE may be added to the RAN paging message to carry the eDRX configuration information of the first type. For example, the added IE carries the first eDRX cycle and the corresponding PTW length. For example, the added IE may be NR paging long eDRX information for RRC INACTIVE-r18. An assigned criticality of the added IE may be set to ignore.

An IE (for example, NR paging eDRX information for RRC INACTIVE) in the RAN paging message may be used to carry the eDRX configuration information of the second type.

The RNA may include a second access network device of the first category and/or a second access network device of a second category.

407: If a category of the second access network device is the first category, send a paging message for the terminal device based on the eDRX configuration information of the first type; or if a category of the second access network device is the second category, send a paging message for the terminal device based on the eDRX configuration information of the second type.

If the category of the second access network device is the first category, and the eDRX configuration information of the first type appears in the first paging message (for example, the RAN paging message) when the second access network device receives the first paging message (for example, the RAN paging message), the paging message for the terminal device is sent based on the eDRX configuration information of the first type, without considering the eDRX configuration information of the second type. If the category of the second access network device is the second category, the second access network device cannot identify the added IE used to carry the eDRX configuration information of the first type. Therefore, the second access network device sends the paging message for the terminal device based on the eDRX configuration information of the second type.

408: The terminal device determines, based on a category of an access network device of a cell in which the terminal device is located, to monitor a paging message by using the eDRX configuration information of the first type or monitor a paging message by using the eDRX configuration information of the second type.

The terminal device may determine the category of the access network device based on capability indication information sent by the access network device of the cell in which the terminal device is located. If the category of the access network device of the cell in which the terminal device is located is the first category, the eDRX configuration information of the second type is not considered, and the eDRX configuration information of the first type is used to monitor the paging message. If the category of the access network device of the cell in which the terminal device is located is the second category, the eDRX configuration information of the second type is used to monitor the paging message.

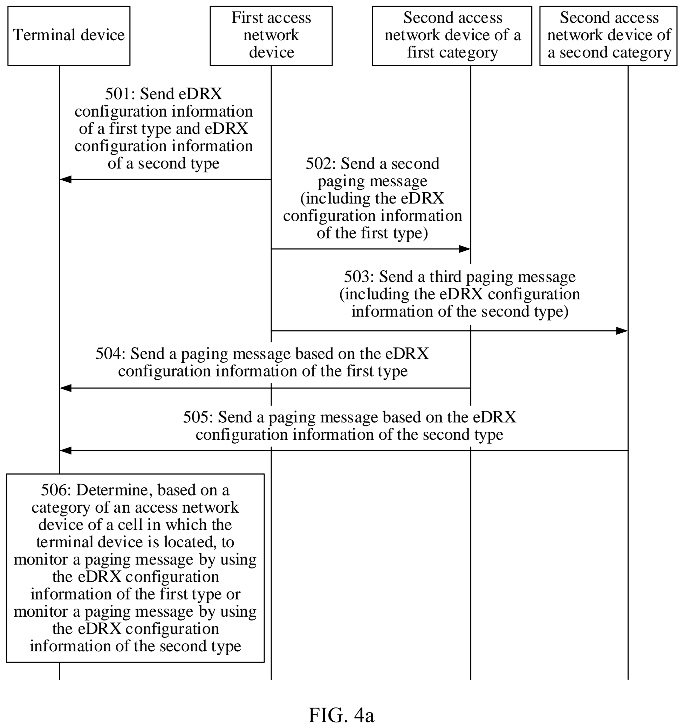

FIG. 4a is a schematic flowchart of another paging method according to an embodiment of this application. FIG. 2 may be a diagram of a system architecture to which the paging method is applicable. In FIG. 4a, a first access network device configures two types of eDRX configuration information for a terminal device, and separately sends different types of eDRX configuration information to second access network devices of different categories. As shown in FIG. 4a, the method may include 501 to 506. An execution sequence of the steps is not limited in this embodiment of this application. As shown in FIG. 4a, the paging method in this embodiment of this application includes but is not limited to the following steps.

501: The first access network device sends eDRX configuration information of a first type and eDRX configuration information of a second type to the terminal device.

For step 501 in this embodiment of this application, refer to step 301 in the embodiment in FIG. 3a. Details are not described herein again.

502: The first access network device sends a second paging message to a second access network device of a first category, where the second paging message includes the eDRX configuration information of the first type.

503: The first access network device sends a third paging message to a second access network device of a second category, where the third paging message includes the eDRX configuration information of the second type.

When the terminal device needs to be paged, the first access network device sends the second paging message to the second access network device of the first category in a radio notification area (radio notification area, RNA). The second paging message includes the eDRX configuration information of the first type. The access network device of the first category supports use of an eDRX cycle greater than a first cycle threshold for paging. In some embodiments, the access network device of the first category may also support use of an eDRX cycle less than or equal to the first cycle threshold for paging. It may be understood that the first access network device may also send a paging message to the terminal device.

The first access network device sends the third paging message to the second access network device of the second category in the RNA, where the third paging message includes the eDRX configuration information of the second type. The second access network device of the second category does not support use of an eDRX cycle greater than the first cycle threshold for paging, but the access network device of the second category supports use of an eDRX cycle less than or equal to the first cycle threshold for paging.

In an implementation, all second access network devices in the RNA may be access network devices of the first category. In another implementation, all second access network devices in the RNA may be access network devices of the second category. In another implementation, the RNA may include a second access network device of the first category and an access network device of the second category.

In some embodiments, the paging message sent by the first access network device to the second access network device may be a radio access network paging RAN paging message.

For example, the RAN paging message sent by the first access network device to the second access network device of the second category may include NR paging eDRX information for RRC INACTIVE, which is assigned a second DReX cycle, for example, 10.24s or another value (for example, 2.56s or 5.12s), to indicate the second access network device of the second category to send a paging message based on the second DReX cycle.

For example, the RAN paging message sent by the first access network device to the second access network device of the first category may include NR paging eDRX information for RRC INACTIVE, which is assigned a first DReX cycle. The first DReX cycle is greater than 10.24s, and the RAN paging message needs to carry PTW configuration information, to indicate the second access network device of the first category to send a paging message based on the second DReX cycle and the PTW configuration information.

In some implementations, before step 502 and step 503 are performed, the first access network device performs capability exchange with the second access network device in the RNA, to determine a category of each second access network device in the RNA.

For example, the first access network device may determine the category of each second access network device through capability exchange in an Xn setup process or by using an operation, administration and maintenance (Operation, Administration and Maintenance, OAM).

In an implementation, the second access network device of the first category may send first capability indication information, where the first capability indication information indicates that the corresponding second access network device supports use of an eDRX cycle greater than the first cycle threshold for paging. The second access network device of the second category may send second capability indication information, where the second capability indication information indicates that the corresponding second access network device supports use of an eDRX cycle less than or equal to the first cycle threshold for paging, but does not support use of an eDRX cycle greater than the first cycle threshold for paging. A receiver (for example, the first access network device) determines the category of the corresponding second access network device by using the received first capability indication information or second capability indication information.

In another implementation, the second access network device of the first category may send capability indication information, where the capability indication information indicates that the second access network device supports use of an eDRX cycle greater than the first cycle threshold for paging. The second access network device of the second category may not send the capability indication information, and it is considered by default that the second access network device that does not send the capability indication information does not support use of an eDRX cycle greater than the first cycle threshold for paging. In this implementation, an assigned criticality of the capability indication information may be marked as Ignore. After receiving a message including the capability indication information, the receiver (for example, the first access network device) determines that the second access network device that sends the capability indication information is an access network device of the first category. If a received message sent by the second access network device does not include the capability indication information, it indicates that the second access network device that sends the message is an access network device of the second category.

504: The second access network device of the first category sends a paging message based on the eDRX configuration information of the first type.

505: The second access network device of the second category sends a paging message based on the eDRX configuration information of the second type.

It may be understood that if the RNA does not include the second access network device of the second category, step 504 is performed, and step 505 is not performed; if the RNA does not include the second access network device of the first category, step 505 is performed, and step 504 is not performed; or if the RNA includes both the second access network device of the first category and the second access network device of the second category, step 504 and step 505 are performed.

506: The terminal device determines, based on a category of an access network device of a cell in which the terminal device is located, to monitor a paging message by using the eDRX configuration information of the first type or monitor a paging message by using the eDRX configuration information of the second type.

For step 506 in this embodiment of this application, refer to step 304 in the embodiment in FIG. 3a. Details are not described herein again.

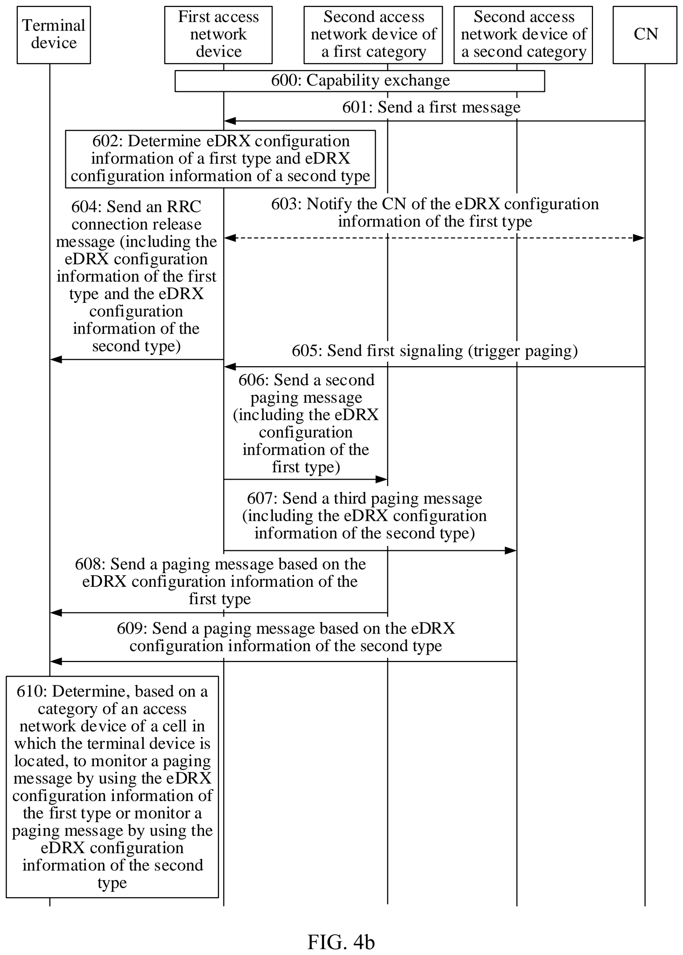

FIG. 4b is an example of another paging method according to an embodiment of this application. FIG. 4b is a more detailed example of the paging method shown in FIG. 4a. As shown in FIG. 4b, the method may include 601 to 610. An execution sequence of the steps is not limited in this embodiment of this application. As shown in FIG. 4b, the paging method in this embodiment of this application includes but is not limited to the following steps.

600: Perform capability exchange.

For example, a first access network device may perform capability exchange with each second access network device in an Xn setup process or by using an operation, administration and maintenance (Operation, Administration and Maintenance, OAM), to determine a category of each second access network device.

In an implementation, a second access network device of a first category may send first capability indication information, where the first capability indication information indicates that the corresponding second access network device supports use of an eDRX cycle greater than a first cycle threshold for paging. A second access network device of a second category may send second capability indication information, where the second capability indication information indicates that the corresponding second access network device supports use of an eDRX cycle less than or equal to the first cycle threshold for paging, but does not support use of an eDRX cycle greater than the first cycle threshold for paging. A receiver (for example, the first access network device) determines the category of the corresponding second access network device by using the received first capability indication information or second capability indication information.

In another implementation, the second access network device of the first category may send capability indication information, where the capability indication information indicates that the second access network device supports use of an eDRX cycle greater than the first cycle threshold for paging. The second access network device of the second category may not send the capability indication information, and it is considered by default that the second access network device that does not send the capability indication information does not support use of an eDRX cycle greater than the first cycle threshold for paging, but supports use of an eDRX cycle less than or equal to the first cycle threshold for paging. In this implementation, an assigned criticality of the capability indication information may be marked as Ignore. After receiving a message including the capability indication information, the receiver (for example, the first access network device) determines that the second access network device that sends the capability indication information is an access network device of the first category. If a received message sent by the second access network device does not include the capability indication information, it indicates that the second access network device that sends the message is an access network device of the second category.

601: A CN sends a first message to the first access network device.

602: The first access network device determines eDRX configuration information of a first type and eDRX configuration information of a second type.

603: The first access network device notifies the CN of the eDRX configuration information of the first type.

604: The first access network device sends an RRC connection release message to a terminal device, where the RRC connection release message includes the eDRX configuration information of the first type and the eDRX configuration information of the second type.

605: The CN sends first signaling to the first access network device, where the first signaling is used to trigger paging by the first access device.

For step 601 to step 605 in this embodiment of this application, refer to step 401 to step 405 in the embodiment in FIG. 3b. Details are not described herein again.

606: The first access network device sends a second paging message to the second access network device of the first category, where the second paging message includes the eDRX configuration information of the first type.

607: The first access network device sends a third paging message to the second access network device of the second category, where the third paging message includes the eDRX configuration information of the second type.

The second paging message and the third paging message may be RAN paging messages.

The RAN paging message sent by the first access network device to the second access network device of the second category may include NR paging eDRX information for RRC INACTIVE, which is assigned a second eDRX cycle, for example, 10.24s or another value (for example, 2.56s or 5.12s), to indicate the second access network device of the second category to send a paging message based on the second eDRX cycle.

For example, the RAN paging message sent by the first access network device to the second access network device of the first category may include NR paging eDRX information for RRC INACTIVE, which is assigned a first eDRX cycle. The first eDRX cycle is greater than 10.24s, and the RAN paging message needs to carry PTW configuration information, to indicate the second access network device of the first category to send a paging message based on the second eDRX cycle and the PTW configuration information.

608: The second access network device of the first category sends a paging message based on the eDRX configuration information of the first type.

609: The second access network device of the second category sends a paging message based on the eDRX configuration information of the second type.

It may be understood that if the RNA does not include the second access network device of the second category, step 608 is performed, and step 609 is not performed; if the RNA does not include the second access network device of the first category, step 609 is performed, and step 608 is not performed; or if the RNA includes both the second access network device of the first category and the second access network device of the second category, step 608 and step 609 are performed.

610: The terminal device determines, based on a category of an access network device of a cell in which the terminal device is located, to monitor a paging message by using the eDRX configuration information of the first type or monitor a paging message by using the eDRX configuration information of the second type.

For step 610 in this embodiment of this application, refer to step 408 in the embodiment shown in FIG. 3b. Details are not described herein again.

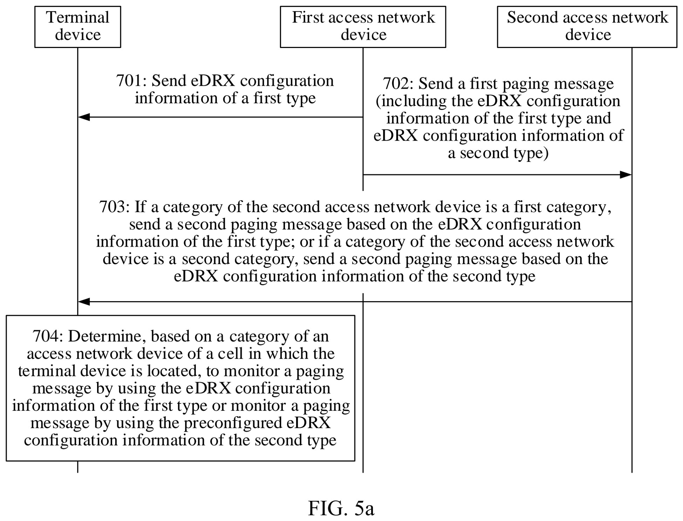

FIG. 5a is a schematic flowchart of another paging method according to an embodiment of this application. FIG. 2 may be a diagram of a system architecture to which the paging method is applicable. In FIG. 5a, a first access network device sends eDRX configuration information of a first type to a terminal device. When moving to a cell served by an access network device of a second category, the terminal device may monitor a paging message based on preconfigured eDRX configuration information of a second type. As shown in FIG. 5a, the method may include 701 to 704. An execution sequence of the steps is not limited in this embodiment of this application. As shown in FIG. 5a, the paging method in this embodiment of this application includes but is not limited to the following steps.

701: The first access network device sends the eDRX configuration information of the first type to the terminal device.

The eDRX configuration information of the first type includes a first eDRX cycle, and the first eDRX cycle is greater than a first cycle threshold. For example, the first cycle threshold may be 10.24s. Further, the eDRX configuration information of the first type may further include paging time window (paging time window, PTW) configuration information.

For example, the eDRX configuration information of the first type may mean an inactive eDRX configuration greater than 10.24s, and may be referred to as a long inactive eDRX configuration for short in some scenarios.

In some embodiments, the first access network device may send the eDRX configuration information of the first type to the terminal device by using an RRC connection release message, where the RRC connection release message is used to release the terminal device to an inactive INACTIVE state.

For example, the RRC connection release message includes a field SuspendConfig, an information element (information element, IE) may be added to an extension field of the field SuspendConfig, and the added IE is used to carry the eDRX configuration information of the first type. The eDRX configuration information of the first type includes a first eDRX cycle (which may be denoted as ran-LongExtendedPagingCycle-r18, and has a value greater than 10.24s) and a PTW length that are used by the terminal device to monitor a paging message.

702: The first access network device sends a first paging message to a second access network device, where the first paging message includes the eDRX configuration information of the first type and the eDRX configuration information of the second type.

703: If a category of the second access network device is a first category, send a second paging message based on the eDRX configuration information of the first type; or if a category of the second access network device is a second category, send a second paging message based on the eDRX configuration information of the second type.

For step 702 and step 703 in this embodiment of this application, refer to step 302 and step 303 in the embodiment in FIG. 3a. Details are not described herein again.

704: The terminal device determines, based on a category of an access network device of a cell in which the terminal device is located, to monitor a paging message by using the eDRX configuration information of the first type or monitor a paging message by using the preconfigured eDRX configuration information of the second type.

The terminal device determines the category of the access network device of the cell in which the terminal device is located. Specifically, optionally, the terminal device may determine, by receiving capability indication information such as system information sent by the access network device, the category of the access network device of the cell in which the terminal device is located. For details, refer to related descriptions of step 304 in FIG. 3a. Details are not described herein again.

If the category of the access network device of the cell in which the terminal device is located is the first category, that is, the access network device of the cell in which the terminal device is located supports use of an eDRX cycle greater than the first cycle threshold for paging, the terminal device monitors the paging message by using the eDRX configuration information of the first type, that is, the eDRX configuration information of the first type takes effect. If the category of the access network device of the cell in which the terminal device is located is the second category, that is, the access network device of the cell in which the terminal device is located supports use of an eDRX cycle less than or equal to the first cycle threshold for paging, but does not support use of an eDRX cycle greater than the first cycle threshold for paging, the terminal device monitors the paging message by using the eDRX configuration information of the second type. The eDRX configuration information of the second type may be preconfigured, or may be specified in a protocol. In other words, when the eDRX configuration information of the first type cannot take effect, the terminal device may fall back to monitor the paging message by using the eDRX configuration information of the second type with support of the cell, for example, monitor the paging message by using an eDRX cycle of 10.24s.

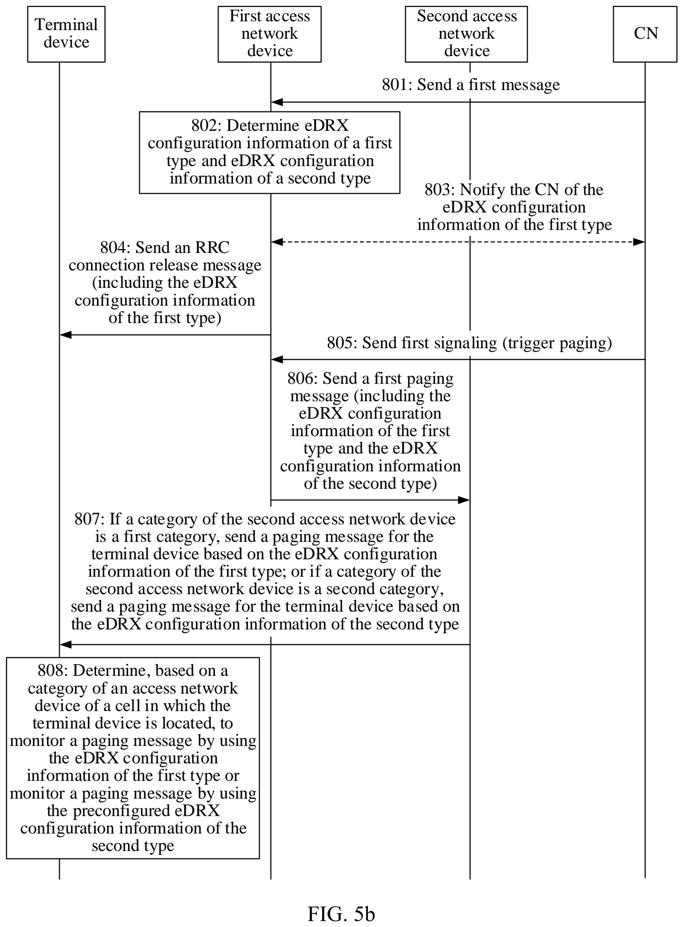

FIG. 5b is an example of another paging method according to an embodiment of this application. FIG. 5b is a more detailed example of the paging method shown in FIG. 5a. As shown in FIG. 5b, the method may include 801 to 808. An execution sequence of the steps is not limited in this embodiment of this application. As shown in FIG. 4b, the paging method in this embodiment of this application includes but is not limited to the following steps.

801: A CN sends a first message to a first access network device.

802: The first access network device determines eDRX configuration information of a first type and eDRX configuration information of a second type.

803: The first access network device notifies the CN of the eDRX configuration information of the first type.

For steps 801 to 803 in this embodiment of this application, refer to step 401 to step 403 in the embodiment in FIG. 3b. Details are not described herein again.

804: The first access network device sends an RRC connection release message to a terminal device, where the RRC connection release message includes the eDRX configuration information of the first type.

For example, the RRC connection release message includes a field SuspendConfig, an IE may be added to an extension field of the field SuspendConfig, and the added IE is used to carry the eDRX configuration information of the first type. The eDRX configuration information of the first type includes a first eDRX cycle (which may be denoted as ran-LongExtendedPagingCycle-r18, and has a value greater than 10.24s) and a PTW length that are used by the terminal device to monitor a paging message.

805: The CN sends first signaling to the first access network device, where the first signaling is used to trigger the first access network device to send a paging message.

806: The first access network device sends a first paging message to a second access network device, where the first paging message includes the eDRX configuration information of the first type and the eDRX configuration information of the second type.

807: If a category of the second access network device is a first category, send a paging message for the terminal device based on the eDRX configuration information of the first type; or if a category of the second access network device is a second category, send a paging message for the terminal device based on the eDRX configuration information of the second type.

For step 805 to step 807 in this embodiment of this application, refer to step 405 to step 407 in the embodiment in FIG. 3b. Details are not described herein again.

808: The terminal device determines, based on a category of an access network device of a cell in which the terminal device is located, to monitor a paging message by using the eDRX configuration information of the first type or monitor a paging message by using the preconfigured eDRX configuration information of the second type.

If the category of the access network device of the cell in which the terminal device is located is the first category, the terminal device monitors the paging message by using the eDRX configuration information of the first type, that is, the eDRX configuration information of the first type takes effect. If the category of the access network device of the cell in which the terminal device is located is the second category, the terminal device monitors the paging message by using the eDRX configuration information of the second type. The eDRX configuration information of the second type may be preconfigured or specified in a protocol.

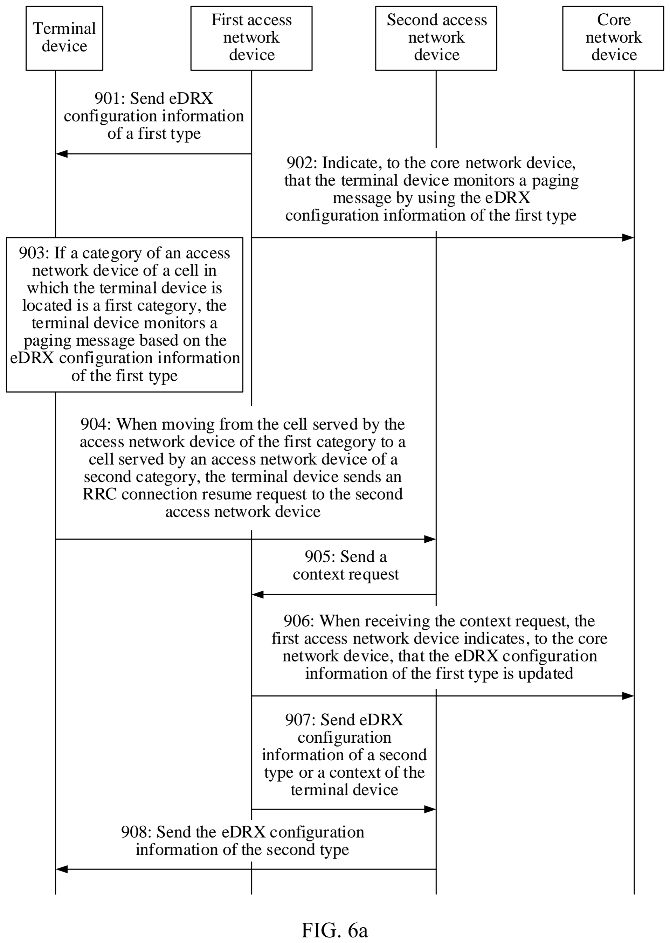

FIG. 6a is a schematic flowchart of another paging method according to an embodiment of this application. FIG. 2 may be a diagram of a system architecture to which the paging method is applicable. In FIG. 6a, a first access network device provides eDRX configuration information of a first type for a terminal device. When moving to a cell served by an access network device of a second category, the terminal device may access the access network device of the second category, and obtain eDRX configuration information of a second type from the access network device of the second category. As shown in FIG. 6a, the method may include 901 to 908. An execution sequence of the steps is not limited in this embodiment of this application. As shown in FIG. 6a, the paging method in this embodiment of this application includes but is not limited to the following steps.

901: The first access network device sends the eDRX configuration information of the first type to the terminal device.

For step 901 in this embodiment of this application, refer to step 701 in the embodiment in FIG. 5a. Details are not described herein again.

902: The first access network device indicates, to a core network device, that the terminal device monitors a paging message by using the eDRX configuration information of the first type.

The first access network device indicates, to the core network device, that the terminal device monitors the paging message by using the eDRX configuration information of the first type, so that the core network device buffers downlink data of the terminal device.

903: If a category of an access network device of a cell in which the terminal device is located is a first category, the terminal device monitors a paging message based on the eDRX configuration information of the first type.

If the category of the access network device of the cell in which the terminal device is located is the first category, that is, the access network device of the cell in which the terminal device is located supports use of an eDRX cycle greater than a first cycle threshold for paging, the terminal device monitors the paging message by using the eDRX configuration information of the first type.

904: When moving from the cell served by the access network device of the first category to a cell served by an access network device of a second category, the terminal device sends an RRC connection resume request to a second access network device.

When the terminal device moves from the cell served by the access network device of the first category to the cell served by the access network device of the second category, because the access network device of the first category supports use of an eDRX cycle greater than the first cycle threshold for paging, and the access network device of the second category does not support use of an eDRX cycle greater than the first cycle threshold for paging, the eDRX configuration information of the first type preconfigured by the first access network device for the terminal device is not applicable. In this case, the terminal device may obtain the eDRX configuration information of the second type from the access network device of the cell in which the terminal device is currently located, and monitors a paging message based on the eDRX configuration information of the second type. The category of the access network device of the cell in which the terminal device is currently located indicates an access network device of the second category, and the eDRX configuration information of the second type includes a second eDRX cycle less than or equal to the first cycle threshold.

For ease of description, in this embodiment of this application, the access network device of the cell in which the terminal device is currently located is referred to as a second access network device. A manner in which the terminal device obtains the eDRX configuration information of the second type from the second access network device may be as follows: The terminal device sends an RRC connection resume request to the second access network device, to trigger the second access network device to request the first access network device to configure the eDRX configuration information of the second type. Alternatively, after obtaining a context of the terminal device, the second access network device may configure the eDRX configuration information of the second type for the terminal device. For details, refer to subsequent descriptions of step 905 to step 908. Details are not described herein.

905: The second access network device sends a context request to the first access network device, where the context request is used to obtain a context of the terminal device.

When the second access network device receives the RRC connection resume request of the terminal device, the second access network device sends the context request to the first access network device, where the context request is used to request to obtain the context of the terminal device.

906: When receiving the context request, the first access network device indicates, to the core network device, that the eDRX configuration information of the first type is updated.

When receiving the context request for the terminal device, the first access network device needs to indicate, to the core network device, that the eDRX configuration information of the first type is updated. That the eDRX configuration information of the first type is updated may be at least one of the following: The eDRX configuration information of the first type is updated to the eDRX configuration information of the second type, the eDRX configuration information of the first type is updated to no inactive eDRX configuration information, a status of the terminal device is updated from an inactive state to an idle IDLE state, and the like.

The first access network device indicates, to the core network device, that the eDRX configuration information of the first type is updated, so that the core network device does not need to buffer data of the terminal device.

907: The first access network device sends the eDRX configuration information of the second type or the context of the terminal device to the second access network device.

908: The second access network device sends the eDRX configuration information of the second type to the terminal device.

In a first implementation, the context of the terminal device is still stored in the first access network device. The first access network device configures the eDRX configuration information of the second type for the terminal device, and sends the eDRX configuration information of the second type to the second access network device. The second access network device sends the eDRX configuration information of the second type to the terminal device.

Specifically, optionally, the first access network device sends a terminal device context obtaining failure RETRIEVE UE CONTEXT FAILURE message to the second access network device because the first access network device determines that the second access network device does not support use of an eDRX cycle greater than the first cycle threshold for paging. The RETRIEVE UE CONTEXT FAILURE message includes an RRC connection release RRCRelease message, and the RRCRelease message carries the eDRX configuration information of the second type. The second access network device sends the RRCRelease message to the terminal device, and the RRC connection release message releases the terminal device to the inactive state. Correspondingly, the terminal device receives the eDRX configuration information of the second type, so as to monitor the paging message based on the eDRX configuration information of the second type. In some embodiments, the terminal device may update the eDRX configuration information of the first type to the eDRX configuration information of the second type.

It may be understood that in this implementation, in step 906, that the first access network device indicates, to the core network device, that the eDRX configuration information of the terminal device is updated may mean that the eDRX configuration information of the first type is updated to the eDRX configuration information of the second type, and the core network device does not need to buffer data of the terminal device.

In a second implementation, the context of the terminal device is released. In this implementation, the terminal device is released to the idle IDLE state, and the terminal device monitors a paging message based on idle eDRX configuration information.

Specifically, optionally, the first access network device sends a terminal device context obtaining failure RETRIEVE UE CONTEXT FAILURE message to the second access network device because the first access network device determines that the second access network device does not support use of an eDRX cycle greater than the first cycle threshold for paging. The RETRIEVE UE CONTEXT FAILURE message includes an RRC connection release RRCRelease message, and the RRC connection release message releases the terminal device to the idle state. The second access network device sends the RRCRelease message to the terminal device, to release the terminal device to the idle state. The terminal device monitors the paging message based on the idle eDRX configuration information. In some embodiments, the terminal device may discard the previously configured eDRX configuration information of the first type.

It may be understood that, in this implementation, in step 906, that the first access network device indicates, to the core network device, that the eDRX configuration information of the terminal device is updated may include: The eDRX configuration information of the first type is updated to no inactive eDRX configuration information, and/or the status of the terminal device is updated from the inactive state to the idle IDLE state.

In a third implementation, the context of the terminal device is transferred by the first access network device and stored in the second access network device. To be specific, the first access network device sends the context of the terminal device to the second access network device, and the second access network device configures the eDRX configuration information of the second type for the terminal device.

Specifically, optionally, the first access network device receives the context request of the second access network device, and sends the context of the terminal device to the second access network device. Further, the second access network device determines to release the terminal device to the inactive state, and the second access network device may indicate, to the core network device, that the eDRX configuration information of the first type of the terminal device is updated. For example, the second access network device sends signaling to the core network device, the core network device updates the status of the terminal device to an RRC INACTIVE with CM CONNECTED state, and the CN does not need to buffer UE data. The second access network device may further interact with the core network device to perform path switch. In some embodiments, the second access network device may indicate, to the core network device by using a path switch request (path switch request) message, that the eDRX configuration information of the first type of the terminal device is updated, that is, the path switch request message includes indication information indicating that the eDRX configuration information of the first type of the terminal device is updated.

The second access network device sends an RRC connection release message to the terminal device, where the RRC connection release message is used to release the terminal device to the inactive state, and the RRC connection release message includes the eDRX configuration information of the second type.

It may be understood that in the third implementation, if the second access network device indicates, to the core network device, that the eDRX configuration information of the first type is updated, the first access network device may not need to indicate, to the core network device, that the eDRX configuration information of the first type is updated, that is, step 906 may not be performed. In the third implementation, if the second access network device does not indicate, to the core network device, that the eDRX configuration information of the first type is updated, step 906 may be performed, that is, the first access network device indicates, to the core network device, that the eDRX configuration information of the first type is updated.

In the third implementation, that the eDRX configuration information of the first type is updated may mean that the eDRX configuration information of the first type is updated to the eDRX configuration information of the second type.

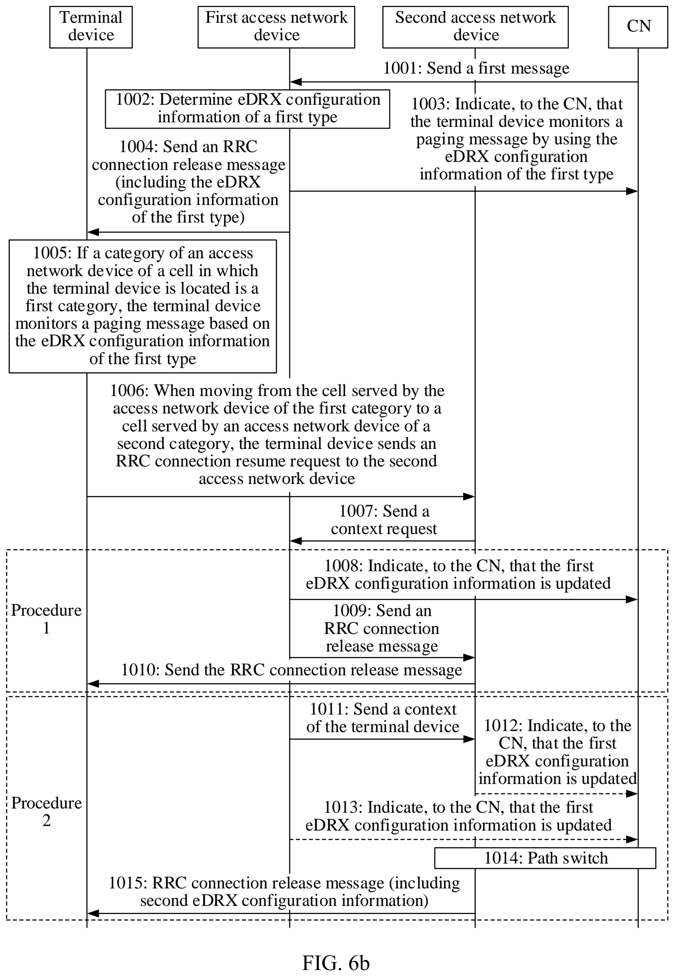

FIG. 6b is an example of another paging method according to an embodiment of this application. FIG. 6b is a more detailed example of the paging method shown in FIG. 6a. An execution sequence of the steps is not limited in this embodiment of this application. As shown in FIG. 6b, the paging method in this embodiment of this application includes but is not limited to the following steps.

1001: A CN sends a first message to a first access network device.

1002: The first access network device determines eDRX configuration information of a first type.

1003: The first access network device indicates, to the CN, that a terminal device monitors a paging message by using the eDRX configuration information of the first type.

1004: The first access network device sends an RRC connection release message to the terminal device, where the RRC connection release message includes the eDRX configuration information of the first type.

1005: If a category of an access network device of a cell in which the terminal device is located is a first category, the terminal device monitors a paging message based on the eDRX configuration information of the first type.

1006: When moving from the cell served by the access network device of the first category to a cell served by an access network device of a second category, the terminal device sends an RRC connection resume request to a second access network device.

1007: The second access network device sends a context request to the first access network device, where the context request is used to obtain a context of the terminal device.

If the first access network device does not return the context of the terminal device to the second access network device, a procedure 1 in FIG. 6b is performed (that is, step 1008 to step 1010 are performed). If the first access network device successfully returns the context of the terminal device to the second access network device, a procedure 2 in FIG. 6b is performed (that is, step 1011 to step 1015 are performed). The following separately describes steps in the procedure 1 and the procedure 2.

The procedure 1 includes but is not limited to the following step 1008 to step 1010.

1008: The first access network device indicates, to the CN, that the first eDRX configuration information is updated.

1009: The first access network device sends an RRC connection release message to the second access network device.

1010: The second access network device sends the RRC connection release message to the terminal device.

In an implementation, the context of the terminal device is still stored in the first access network device. The first access network device configures the eDRX configuration information of the second type for the terminal device, and sends the eDRX configuration information of the second type to the second access network device. The second access network device sends the eDRX configuration information of the second type to the terminal device.

Specifically, optionally, the first access network device sends a terminal device context obtaining failure RETRIEVE UE CONTEXT FAILURE message to the second access network device, where the RETRIEVE UE CONTEXT FAILURE message includes an RRC connection release RRCRelease message, and the RRCRelease message carries the eDRX configuration information of the second type. The second access network device sends the RRCRelease message to the terminal device, and the RRC connection release message releases the terminal device to the inactive state. Correspondingly, the terminal device receives the eDRX configuration information of the second type, so as to monitor the paging message based on the eDRX configuration information of the second type.

That the first access network device indicates, to the CN, that the first eDRX configuration information is updated may mean notifying the CN that the first eDRX configuration information is updated to the eDRX configuration information of the second type.

In another implementation, the context of the terminal device is released. In this implementation, the terminal device is released to the idle IDLE state, and the terminal device monitors a paging message based on idle eDRX configuration information.

Specifically, optionally, the first access network device sends a terminal device context obtaining failure RETRIEVE UE CONTEXT FAILURE message to the second access network device, where the RETRIEVE UE CONTEXT FAILURE message includes an RRC connection release RRCRelease message, and the RRC connection release message releases the terminal device to the idle state. The second access network device sends the RRCRelease message to the terminal device, to release the terminal device to the idle state. The terminal device monitors the paging message based on the idle eDRX configuration information.

That the first access network device indicates, to the CN, that the eDRX configuration information of the terminal device is updated may mean that the eDRX configuration information of the first type is updated to no inactive eDRX configuration information, or the status of the terminal device is updated from the inactive state to the idle IDLE state.

The procedure 2 includes but is not limited to the following step 1011 to step 1015.

1011: The first access network device sends the context of the terminal device to the second access network device.

The first access network device sends the context of the terminal device to the second access network device. In the procedure 2, the first access network device or the second access network device may indicate, to the CN, that the eDRX configuration information of the first type is updated, that is, step 1012 or step 1013 may be performed.

1012: The second access network device indicates, to the CN, that the first eDRX configuration information is updated.

1013: The first access network device indicates, to the CN, that the first eDRX configuration information is updated.

That the eDRX configuration information of the terminal device is updated is indicated to the CN in the procedure 2 may mean that the eDRX configuration information of the terminal device is updated from the eDRX configuration information of the first type to the eDRX configuration information of the second type, and the core network device does not need to buffer data. The second access network device may determine, based on that the first access network device does not support use of a cycle greater than the first cycle threshold for paging, that the first eDRX configuration information is updated to the eDRX configuration information of the second type.

1014: Perform path switch.

1015: The second access network device sends an RRC connection release message to the terminal device, where the RRC connection release message includes the eDRX configuration information of the second type.

The second access network device may configure the eDRX configuration information of the second type for the terminal device when releasing the terminal device to the inactive state. For example, the second access network device sends the RRC connection release message to the terminal device, where the RRC connection release message includes the eDRX configuration information of the second type.

The following describes communication apparatuses provided in embodiments of this application.

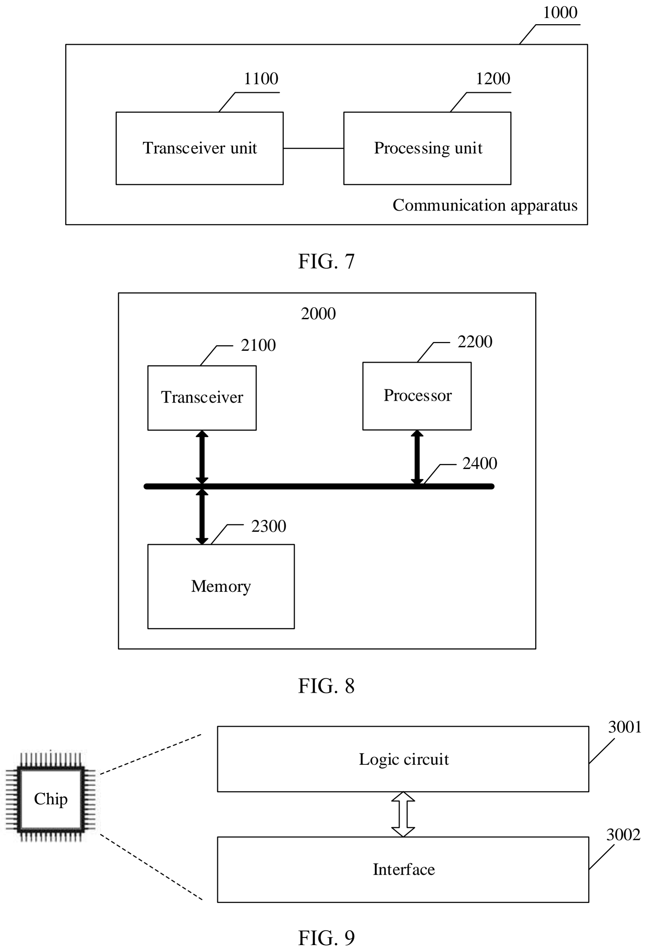

In this application, the communication apparatus is divided into functional modules based on the foregoing method embodiments. For example, functional modules corresponding to functions may be obtained through division, or two or more functions may be integrated into one processing module. The integrated module may be implemented in a form of hardware, or may be implemented in a form of a software functional module. It should be noted that division into the modules in this application is an example, and is merely logical function division. Duing actual implementation, there may be another division manner. The following describes in detail communication apparatuses in embodiments of this application with reference to FIG. 7 to FIG. 9.

FIG. 7 is a diagram of a structure of a communication apparatus according to an embodiment of this application. As shown in FIG. 7, the communication apparatus 1000 may correspondingly implement a function or step implemented by the communication apparatus (for example, the terminal device or the access network device) in the foregoing method embodiments. The communication apparatus may include a processing unit 1200 and a transceiver unit 1100. Optionally, a storage unit may be further included. The storage unit may be configured to store instructions (code or a program) and/or data. The processing unit 1200 and the transceiver unit 1100 may be coupled to the storage unit. For example, the processing unit 1200 may read the instructions (the code or the program) and/or the data in the storage unit, to implement a corresponding method. The foregoing units may be independently disposed, or may be partially or completely integrated. For example, the transceiver unit 1100 may include a sending unit and a receiving unit. The sending unit may be a transmitter, and the receiving unit may be a receiver. An entity corresponding to the transceiver unit 1100 may be a transceiver.

In some possible implementations, the communication apparatus 1000 can correspondingly implement behavior and functions of the terminal device in the foregoing method embodiments. For example, the communication apparatus 1000 may be a terminal device, or may be a component (for example, a chip or a circuit) used in the terminal device. For example, the transceiver unit 1100 may be configured to perform all receiving or sending operations performed by the terminal device in the embodiments in FIG. 3a to FIG. 6b, for example, step 301 and step 303 in FIG. 3a, step 404 and step 407 in FIG. 3b, step 501, step 504, and step 505 in FIG. 4a, step 604, step 608, and step 609 in FIG. 4b, step 701 and step 703 in FIG. 5a, step 804 and step 807 in FIG. 5b, step 901, step 904, and step 908 in FIG. 6a, step 1004, step 1006, step 1010, and step 1015 in FIG. 6b, and/or another process used to support the technology described in this specification. The processing unit 1200 is configured to perform all operations performed by the terminal device other than the receiving and sending operations in the embodiments shown in FIG. 3a to FIG. 6b, for example, step 304 in the embodiment shown in FIG. 3a, step 408 in the embodiment shown in FIG. 3b, step 506 in the embodiment shown in FIG. 4a, step 610 in the embodiment shown in FIG. 4b, step 704 in the embodiment shown in FIG. 5a, step 808 in the embodiment shown in FIG. 5b, step 903 in the embodiment shown in FIG. 6a, and step 1005 in the embodiment shown in FIG. 6b.

In some possible implementations, the communication apparatus 1000 can correspondingly implement behavior and functions of the first access network device in the foregoing method embodiments. For example, the communication apparatus 1000 may be a first access network device, or may be a component (for example, a chip or a circuit) used in the first access network device. For example, the transceiver unit 1100 may be configured to perform all receiving or sending operations performed by the first access network device in the embodiments in FIG. 3a to FIG. 6b, for example, step 301 and step 302 in FIG. 3a, step 401, step 403, step 404, step 405, and step 406 in FIG. 3b, step 501, step 502, and step 503 in FIG. 4a, step 601, step 603, step 605, step 606, and step 607 in FIG. 4b, step 701 and step 702 in FIG. 5a, step 801, step 803, step 805, and step 806 in FIG. 5b, step 901, step 902, step 905, step 906, and step 907 in FIG. 6a, step 1001, step 1003, step 1004, step 1007, step 1008, step 1009, and step 1011 in FIG. 6b, and/or another process used to support the technology described in this specification. The processing unit 1200 is configured to perform all operations performed by the first access network device other than the receiving and sending operations in the embodiments in FIG. 3a to FIG. 6b, for example, step 402 in the embodiment shown in FIG. 3b, step 602 in the embodiment shown in FIG. 4b, step 802 in the embodiment shown in FIG. 5b, and step 1002 in the embodiment shown in FIG. 6b.

In some possible implementations, the communication apparatus 1000 can correspondingly implement behavior and functions of the second access network device in the foregoing method embodiments. For example, the communication apparatus 1000 may be a second access network device, or may be a component (for example, a chip or a circuit) used in the second access network device. For example, the transceiver unit 1100 may be configured to perform all receiving or sending operations performed by the second access network device in the embodiments in FIG. 3a to FIG. 6b, for example, step 302 and step 303 in FIG. 3a, step 406 and step 407 in FIG. 3b, step 502 and step 504 in FIG. 4a, or step 503 and step 505 in FIG. 4a, step 606 and step 608 in FIG. 4b, or step 607 and step 609 in FIG. 4b, step 702 and step 703 in FIG. 5a, step 806 and step 807 in FIG. 5b, step 904, step 905, step 907, and step 908 in FIG. 6a, step 1006, step 1007, step 1009, step 1010, step 1011, step 1012, and step 1015 in FIG. 6b, and/or another process used to support the technology described in this specification. The processing unit 1200 is configured to perform all operations performed by the second access network device other than the sending and receiving operations in the embodiments in FIG. 3a to FIG. 6b.

The terminal device and the access network device in embodiments of this application are described above, and possible product forms of the terminal device and the access network device are described below. It should be understood that any form of product having a function of the terminal device in FIG. 7 or any form of product having a function of the access network device in FIG. 7 is within the protection scope of embodiments of this application. It should be further understood that the following descriptions are merely examples, and product forms of the access network device and the terminal device in embodiments of this application are not limited thereto.

In a possible implementation, in the communication apparatus shown in FIG. 7, the processing unit 1200 may be one or more processors, and the transceiver unit 1100 may be a transceiver. Alternatively, the transceiver unit 1100 may be a sending unit and a receiving unit, the sending unit may be a transmitter, and the receiving unit may be a receiver. The sending unit and the receiving unit are integrated into one device, for example, a transceiver. In embodiments of this application, the processor and the transceiver may be coupled, or the like. A connection manner between the processor and the transceiver is not limited in embodiments of this application.

FIG. 8 is a diagram of a structure of another communication apparatus 2000 according to an embodiment of this application. The communication apparatus in FIG. 8 may be the foregoing terminal device, or may be the foregoing access network device.

As shown in FIG. 8, the communication apparatus 2000 includes one or more processors 2200 and a transceiver 2100. The transceiver 2100 may implement a function of the transceiver unit 1100, and the processor 2200 may implement a function of the processing unit 1200.

In implementations of the communication apparatus shown in FIG. 8, the transceiver may include a receiver and a transmitter. The receiver is configured to perform a receiving function (or operation), and the transmitter is configured to perform a transmission function (or operation). In addition, the transceiver is configured to communicate with another device/apparatus through a transmission medium.

Optionally, the communication apparatus 2000 may further include one or more memories 2300, configured to store program instructions and/or data. The memory 2300 is coupled to the processor 2200. The coupling in this embodiment of this application is an indirect coupling or a communication connection between apparatuses, units, or modules, may be in an electrical form, a mechanical form, or another form, and is used for information exchange between the apparatuses, the units, or the modules. The processor 2200 may cooperate with the memory 2300. The processor 2200 may execute the program instructions stored in the memory 2300.

In this embodiment of this application, a specific connection medium between the transceiver 2100, the processor 2200, and the memory 2300 is not limited. In this embodiment of this application, the transceiver 2100, the processor 2200, and the memory 2300 are connected by using a bus 2400 in FIG. 8. The bus is represented by a bold line in FIG. 8. A connection manner between other components is merely an example for description, and constitutes no limitation. The bus may be classified into an address bus, a data bus, a control bus, or the like. For ease of representation, only one bold line is used for representation in FIG. 8, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, or may be any conventional processor or the like. The steps of the method disclosed with reference to embodiments of this application may be directly performed by a hardware processor, or may be performed by a combination of hardware and software modules in the processor.

In this embodiment of this application, the memory may include but is not limited to a nonvolatile memory, for example, a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a compact disc read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this is not limited thereto. The memory in embodiments of this application may alternatively be a circuit or any other apparatus that can implement a storage function, and is configured to store program instructions and/or data.

The processor 2200 is mainly configured to process a communication protocol and communication data, control the entire communication apparatus, execute a software program, and process data of the software program. The memory 2300 is mainly configured to store the software program and data. The transceiver 2100 may include a control circuit and an antenna. The control circuit is mainly configured to: perform conversion between a baseband signal and a radio frequency signal, and process the radio frequency signal. The antenna is mainly configured to receive and send radio frequency signals in a form of electromagnetic waves. The input/output apparatus, such as a touchscreen, a display, or a keyboard, is mainly configured to: receive data input by a user and output data to the user.

After the communication apparatus is powered on, the processor 2200 may read the software program in the memory 2300, explain and execute instructions of the software program, and process data of the software program. When data needs to be sent in a wireless manner, after performing baseband processing on the to-be-sent data, the processor 2200 outputs a baseband signal to the radio frequency circuit; and the radio frequency circuit performs radio frequency processing on the baseband signal and then sends the radio frequency signal to the outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 2200. The processor 2200 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

It may be understood that the communication apparatus shown in this embodiment of this application may further include more components than those in FIG. 8, and the like. This is not limited in this embodiment of this application. The methods performed by the processor and the transceiver are merely examples. For specific steps performed by the processor and the transceiver, refer to the methods described above.

In another possible implementation, in the communication apparatus shown in FIG. 7, the processing unit 1200 may be one or more logic circuits, and the transceiver unit 1100 may be an input/output interface, which may alternatively be referred to as a communication interface, an interface circuit, an interface, or the like. Alternatively, the transceiver unit 1100 may be a sending unit and a receiving unit. The sending unit may be an output interface, and the receiving unit may be an input interface. The sending unit and the receiving unit are integrated into one unit, for example, an input/output interface. As shown in FIG. 9, a communication apparatus shown in FIG. 9 includes a logic circuit 3001 and an interface 3002. That is, the processing unit 1200 may be implemented by using the logic circuit 3001, and the transceiver unit 1100 may be implemented by using the interface 3002. The logic circuit 3001 may be a chip, a processing circuit, an integrated circuit, a system on chip (system on chip, SoC) chip, or the like. The interface 3002 may be a communication interface, an input/output interface, a pin, or the like. For example, FIG. 9 shows an example in which the communication apparatus is a chip. The chip includes the logic circuit 3001 and the interface 3002.

In this embodiment of this application, the logic circuit may further be coupled to the interface. A specific connection manner of the logical circuit and the interface is not limited in this embodiment of this application.

It may be understood that the communication apparatus shown in embodiments of this application may implement the method provided in embodiments of this application in a form of hardware or in a form of software. This is not limited in embodiments of this application.

An embodiment of this application further provides a wireless communication system. The wireless communication system includes an access network device and a terminal device. The access network device and the terminal device may be configured to perform the method in any one of the foregoing embodiments.

In addition, this application further provides a computer-readable storage medium. The computer-readable storage medium stores computer code. When the computer code is run on a computer, the computer is enabled to perform operations and/or processing performed by the access network device and the terminal device in the method provided in this application.

This application further provides a computer program product. The computer program product includes computer code or a computer program. When the computer code or the computer program runs on a computer, operations and/or processing performed by the access network device and the terminal device in the method provided in this application are/is performed.

In the several embodiments provided in this application, it should be understood that the disclosed system, apparatus, and method may be implemented in other manners. For example, the described apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be connections in an electrical, mechanical, or another form.

The units described as separate parts may or may not be physically separate, and parts displayed as units may or may not be physical units, may be located in one place, or may be distributed on a plurality of network units. Some or all of the units may be selected based on actual requirements to achieve the technical effects of the solutions provided in embodiments in this application.

In addition, functional units in embodiments of this application may be integrated into one processing unit, or each unit may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a readable storage medium and includes several instructions for instructing a computer device (which may be a personal computer, a server, or an access network device) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

**Claims**

1. A paging method, applied to a terminal device or a chip in the terminal device, and comprising:

   receiving extended discontinuous reception eDRX configuration information of a first type and eDRX configuration information of a second type, wherein the eDRX configuration information of the first type comprises a first eDRX cycle and a paging time window PTW length, the eDRX configuration information of the second type comprises a second eDRX cycle, the first eDRX cycle is greater than a first cycle threshold, and the second eDRX cycle is less than or equal to the first cycle threshold; and
   determining, based on capability indication information from an access network device of a cell in which the terminal device is located, to monitor a paging message by using the eDRX configuration information of the first type or monitor a paging message by using the eDRX configuration information of the second type, wherein a category of the access network device is determined based on at least whether the access network device supports use of an eDRX cycle greater than the first cycle threshold for paging.

2. The method according to claim 1, wherein the first cycle threshold is 10.24 seconds.

3. The method according to claim 1, wherein determining, based on the capability indication information from the access network device of the cell in which the terminal device is located, to monitor the paging message by using the eDRX configuration information of the first type or monitor the paging message by using the eDRX configuration information of the second type comprises:

   if a received system information block type 1 SIB1 sent by the access network device of the cell in which the terminal device is located comprises first capability indication information, monitoring, by the terminal device, the paging message based on the eDRX configuration information of the first type, wherein the first capability indication information indicates that the access network device supports use of the eDRX cycle greater than the first cycle threshold for paging; or
   if a received SIB1 sent by the access network device of the cell in which the terminal device is located does not comprise the first capability indication information, and the SIB1 comprises second capability indication information, monitoring, by the terminal device, the paging message based on the eDRX configuration information of the second type, wherein the second capability indication information indicates that the access network device supports use of an eDRX cycle less than or equal to the first cycle threshold for paging.

4. The method according to claim 3, wherein the second capability indication information is eDRX-AllowedInactive-r17.

5. The method according to any one of claims 1 to 4, wherein the eDRX configuration information of the first type and the eDRX configuration information of the second type are comprised in a radio resource control RRC connection release message.

6. The method according to any one of claims 1 to 5, wherein the method further comprises:

sending third capability indication information if the terminal device supports use of the eDRX configuration information of the first type for paging, wherein the third capability indication information indicates that the terminal device supports use of the eDRX configuration information of the first type for paging; or
sending fourth capability indication information if the terminal device supports use of the eDRX configuration information of the second type for paging, wherein the fourth capability indication information indicates that the terminal device supports use of the eDRX configuration information of the second type for paging.

7. A paging method, applied to a first access network device or a chip in the first access network device, and comprising: sending extended discontinuous reception eDRX configuration information of a first type and eDRX configuration information of a second type to a terminal device, wherein the eDRX configuration information of the first type comprises a first eDRX cycle and a paging time window PTW length, the eDRX configuration information of the second type comprises a second eDRX cycle, the first eDRX cycle is greater than a first cycle threshold, and the second eDRX cycle is less than or equal to the first cycle threshold.

8. The method according to claim 7, wherein the method further comprises:
sending a first paging message to a second access network device, wherein the first paging message comprises an identifier of the terminal device, the eDRX configuration information of the first type, and the eDRX configuration information of the second type.

9. The method according to claim 8, wherein the second access network device is an access network device of a first category or an access network device of a second category, the access network device of the first category supports use of an eDRX cycle greater than the first cycle threshold for paging, the access network device of the second category does not support use of an eDRX cycle greater than the first cycle threshold for paging, and the access network device of the second category supports use of an eDRX cycle less than or equal to the first cycle threshold for paging.

10. The method according to claim 7, wherein the method further comprises:

sending a second paging message to a second access network device of a first category, wherein the second paging message comprises an identifier of the terminal device and the eDRX configuration information of the first type, and the second access network device of the first category supports use of an eDRX cycle greater than the first cycle threshold for paging; and
sending a third paging message to a second access network device of a second category, wherein the third paging message comprises the identifier of the terminal device and the eDRX configuration information of the second type, the second access network device of the second category does not support use of an eDRX cycle greater than the first cycle threshold for paging, and the access network device of the second category supports use of an eDRX cycle less than or equal to the first cycle threshold for paging.

11. The method according to claim 10, wherein the method further comprises:
receiving capability indication information sent by the second access network device of the first category, wherein the capability indication information indicates that the corresponding second access network device of the first category supports use of the eDRX cycle greater than the first cycle threshold for paging.

12. The method according to any one of claims 7 to 11, wherein the eDRX configuration information of the first type and the eDRX configuration information of the second type are comprised in a radio resource control RRC connection release message.

13. The method according to any one of claims 7 to 12, wherein the first cycle threshold is 10.24 seconds.

14. The method according to any one of claims 7 to 13, wherein the method further comprises:

if the first access network device supports use of the eDRX configuration information of the first type for paging, sending a SIB1 comprising first capability indication information, wherein the first capability indication information indicates that the first access network device supports use of an eDRX cycle greater than the first cycle threshold for paging; or
if the first access network device supports use of the eDRX configuration information of the second type for paging, sending a SIB1 comprising second capability indication information, wherein the second capability indication information indicates that the first access network device supports use of an eDRX cycle less than or equal to the first cycle threshold for paging.

15. The method according to claim 14, wherein the second capability indication information is eDRX-AllowedInactive-r17.

16. A paging method, applied to a second access network device or a chip in the second access network device, and comprising:
    receiving a first paging message sent by a first access network device, wherein the first paging message comprises an identifier of a terminal device, eDRX configuration information of a first type, and eDRX configuration information of a second type, the eDRX configuration information of the first type comprises a first eDRX cycle and a paging time window PTW length, the eDRX configuration information of the second type comprises a second eDRX cycle, the first eDRX cycle is greater than a first cycle threshold, and the second eDRX cycle is less than or equal to the first cycle threshold.

17. The method according to claim 16, wherein the first cycle threshold is 10.24 seconds.

18. The method according to claim 16, wherein the method further comprises:

    if the second access network device supports use of the eDRX configuration information of the first type for paging, sending a SIB1 comprising first capability indication information, wherein the first capability indication information indicates that the second access network device supports use of an eDRX cycle greater than the first cycle threshold for paging; or
    if the second access network device supports use of the eDRX configuration information of the second type for paging, sending a SIB1 comprising second capability indication information, wherein the second capability indication information indicates that the second access network device supports use of an eDRX cycle less than or equal to the first cycle threshold for paging.

19. The method according to claim 18, wherein the second capability indication information is eDRX-AllowedInactive-r17.

20. The method according to any one of claims 16 to 19, wherein the method further comprises:

    if a category of the second access network device is a first category, sending a second paging message based on the eDRX configuration information of the first type, wherein the second paging message comprises the identifier of the terminal device; or
    if a category of the second access network device is a second category, sending a second paging message based on the eDRX configuration information of the second type, wherein the second paging message comprises the identifier of the terminal device, wherein
    the first category and the second category are determined based on at least whether the second access network device supports use of an eDRX cycle greater than the first cycle threshold for paging.

21. The method according to claim 20, wherein an access network device of the first category supports use of an eDRX cycle greater than the first cycle threshold for paging, an access network device of the second category does not support use of an eDRX cycle greater than the first cycle threshold for paging, and the access network device of the second category supports use of an eDRX cycle less than or equal to the first cycle threshold for paging.

22. A paging method, applied to a terminal device or a chip in the terminal device, and comprising:

    receiving extended discontinuous reception eDRX configuration information of a first type, wherein the eDRX configuration information of the first type comprises a first eDRX cycle and a paging time window PTW length, and the first eDRX cycle is greater than a first cycle threshold; and
    if a category of an access network device of a cell in which the terminal device is located is a first category, monitoring a paging message based on the eDRX configuration information of the first type; or
    if a category of an access network device of a cell in which the terminal device is located is a second category, receiving eDRX configuration information of a second type from the access network device of the cell in which the terminal device is located, and monitoring a paging message based on the eDRX configuration information of the second type, wherein the eDRX configuration information of the second type comprises a second eDRX cycle, and the second eDRX cycle is less than or equal to the first cycle threshold, wherein

the first category and the second category are determined based on at least whether the access network device supports use of an eDRX cycle greater than the first cycle threshold for paging.

23. The method according to claim 22, wherein an access network device of the first category supports use of an eDRX cycle greater than the first cycle threshold for paging, an access network device of the second category does not support use of an eDRX cycle greater than the first cycle threshold for paging, and the access network device of the second category supports use of an eDRX cycle less than or equal to the first cycle threshold for paging.

24. The method according to claim 22 or 23, wherein before receiving the eDRX configuration information of the second type from the access network device of the cell in which the terminal device is located, the method further comprises:

when the terminal device moves from a cell served by the access network device of the first category to a cell served by the access network device of the second category, sending a radio resource control RRC connection resume request to the access network device of the cell in which the terminal device is located; and receiving the eDRX configuration information of the second type from the access network device of the cell in which the terminal device is located comprises:
receiving an RRC connection release message sent by the access network device of the cell in which the terminal device is located, wherein the RRC connection release message comprises the eDRX configuration information of the second type.

25. A paging method, applied to a first access network device or a chip in the first access network device, and comprising:

sending extended discontinuous reception eDRX configuration information of a first type to a terminal device, wherein the eDRX configuration information of the first type comprises a first eDRX cycle and a paging time window PTW length, and the first eDRX cycle is greater than a first cycle threshold;
indicating, to a core network device, that the terminal device monitors a paging message by using the eDRX configuration information of the first type; and
when the first access network device receives a context request sent by a second access network device, indicating, to the core network device, that the first eDRX configuration information is updated, wherein the context request comprises an identifier of the terminal device.

26. The method according to claim 25, wherein the second access network device does not support use of an eDRX cycle greater than the first cycle threshold for paging, and the second access network device supports use of an eDRX cycle less than or equal to the first cycle threshold for paging.

27. The method according to claim 25 or 26, wherein the method further comprises:
sending a radio resource control RRC connection release message to the second access network device, wherein the RRC connection release message indicates to release the terminal device to an idle state or an inactive state.

28. The method according to claim 27, wherein if the RRC connection release message indicates to release the terminal device to the inactive state,
the RRC connection release message comprises eDRX configuration information of a second type, the eDRX configuration information of the second type comprises a second eDRX cycle, and the second eDRX cycle is less than or equal to the first cycle threshold.

29. A communication apparatus, comprising:

a transceiver unit, configured to receive extended discontinuous reception eDRX configuration information of a first type and eDRX configuration information of a second type, wherein the eDRX configuration information of the first type comprises a first eDRX cycle and a paging time window PTW length, the eDRX configuration information of the second type comprises a second eDRX cycle, the first eDRX cycle is greater than a first cycle threshold, and the second eDRX cycle is less than or equal to the first cycle threshold; and
a processing unit, configured to determine, based on capability information from an access network device of a cell in which the terminal device is located, to monitor a paging message by using the eDRX configuration information of the first type or monitor a paging message by using the eDRX configuration information of the second type, wherein a category of the access network device is determined based on at least whether the access network device supports use of an eDRX cycle greater than the first cycle threshold for paging.

30. A communication apparatus, comprising:

a transceiver unit, configured to send extended discontinuous reception eDRX configuration information of a first type and eDRX configuration information of a second type to a terminal device, wherein the eDRX configuration information of the first type comprises a first eDRX cycle and a paging time window PTW length, the eDRX configuration information of the second type comprises a second eDRX cycle, the first eDRX cycle is greater than a first cycle threshold, and the second eDRX cycle is less than or equal to the first cycle threshold.

31. A communication apparatus, comprising:

a transceiver unit, configured to receive a first paging message sent by a first access network device, wherein the first paging message comprises an identifier of a terminal device, eDRX configuration information of a first type, and eDRX configuration information of a second type, the eDRX configuration information of the first type comprises a first eDRX cycle and a paging time window PTW length, the eDRX configuration information of the second type comprises a second eDRX cycle, the first eDRX cycle is greater than a first cycle threshold, and the second eDRX cycle is less than or equal to the first cycle threshold.

32. A communication apparatus, comprising:

a transceiver unit, configured to receive extended discontinuous reception eDRX configuration information of a first type, wherein the eDRX configuration information of the first type comprises a first eDRX cycle and a paging time window PTW length, and the first eDRX cycle is greater than a first cycle threshold; and
a processing unit, configured to: if a category of an access network device of a cell in which the terminal device is located is a first category, monitor a paging message based on the eDRX configuration information of the first type; or
if a category of an access network device of a cell in which the terminal device is located is a second category, receive eDRX configuration information of a second type from the access network device of the cell in which the terminal device is located, and monitor a paging message based on the eDRX configuration information of the second type, wherein the eDRX configuration information of the second type comprises a second eDRX cycle, and the second eDRX cycle is less than or equal to the first cycle threshold, wherein
the first category and the second category are determined based on at least whether the access network device supports use of an eDRX cycle greater than the first cycle threshold for paging.

33. A communication apparatus, comprising:

a transceiver unit, configured to send extended discontinuous reception eDRX configuration information of a first type to a terminal device, wherein the eDRX configuration information of the first type comprises a first eDRX cycle and a paging time window PTW length, and the first eDRX cycle is greater than a first cycle threshold, wherein the transceiver unit is further configured to indicate, to a core network device, that the terminal device monitors a paging message by using the eDRX configuration information of the first type; and
the transceiver unit is further configured to: when the first access network device receives a context request sent by a second access network device, indicate, to the core network device, that the first eDRX configuration information is updated, wherein the context request comprises an identifier of the terminal device.

34. A communication apparatus, comprising a processor, wherein

the processor is coupled to a memory;
the memory is configured to store instructions; and
the processor is configured to execute the instructions, to perform the method according to any one of claims 1 to 6; or
the processor is configured to execute the instructions, to perform the method according to any one of claims 7 to 15; or
the processor is configured to execute the instructions, to perform the method according to any one of claims 16 to 21; or
the processor is configured to execute the instructions, to perform the method according to any one of claims 22 to 24; or
the processor is configured to execute the instructions, to perform the method according to any one of claims 25 to 28.

35. A computer-readable storage medium, wherein the computer-readable storage medium is configured to store a computer program, and when the computer program is executed, the method according to any one of claims 1 to 6 is performed; or when the computer program is executed, the method according to any one of claims 7 to 15 is performed; or when the computer program is executed, the method according to any one of claims 16 to 21 is performed; or when the computer program is executed, the method according to any one of claims 22 to 24 is performed; or when the computer program is executed, the method according to any one of claims 25 to 28 is performed.

UE 1 | gNB 1 | gNB 2 | AMF or UPF

101: Send signaling or data for the UE 1

102: Send a paging message

103: Send a paging message for the UE 1

104: Send a paging message for the UE 1

105: RRC connection resume request

106: Send a context obtaining request

107: Context of the UE 1

108: RRC connection resume

109: RRC connection resume complete

110: Path switch

FIG. 1

208

UDM

N25

N8

N20

205

N22

206

N7

207

N5

AMF

SMF

PCF

AF

N2

N2

N4

UE

N3

RAN

UPF

N6

DN

201

202

203

204

FIG. 2

| Terminal device | First access network device | Second access network device |
|---|---|---|

301: Send eDRX configuration information of a first type and eDRX configuration information of a second type

302: Send a first paging message (including the eDRX configuration information of the first type and the eDRX configuration information of the second type)

303: If a category of the second access network device is a first category, send a paging message for the terminal device based on the eDRX configuration information of the first type; or if a category of the second access network device is a second category, send a paging message for the terminal device based on the eDRX configuration information of the second type

304: Determine, based on a category of an access network device of a cell in which the terminal device is located, to monitor a paging message by using the eDRX configuration information of the first type or monitor a paging message by using the eDRX configuration information of the second type

FIG. 3a

FIG. 3b

| Terminal device | First access network device | Second access network device of a first category | Second access network device of a second category |
|---|---|---|---|

501: Send eDRX configuration information of a first type and eDRX configuration information of a second type

502: Send a second paging message (including the eDRX configuration information of the first type)

503: Send a third paging message (including the eDRX configuration information of the second type)

504: Send a paging message based on the eDRX configuration information of the first type

505: Send a paging message based on the eDRX configuration information of the second type

506: Determine, based on a category of an access network device of a cell in which the terminal device is located, to monitor a paging message by using the eDRX configuration information of the first type or monitor a paging message by using the eDRX configuration information of the second type

FIG. 4a

| Terminal device | First access network device | Second access network device of a first category | Second access network device of a second category | CN |
|---|---|---|---|---|

600: Capability exchange

601: Send a first message

602: Determine eDRX configuration information of a first type and eDRX configuration information of a second type

603: Notify the CN of the eDRX configuration information of the first type

604: Send an RRC connection release message (including the eDRX configuration information of the first type and the eDRX configuration information of the second type)

605: Send first signaling (trigger paging)

606: Send a second paging message (including the eDRX configuration information of the first type)

607: Send a third paging message (including the eDRX configuration information of the second type)

608: Send a paging message based on the eDRX configuration information of the first type

609: Send a paging message based on the eDRX configuration information of the second type

610: Determine, based on a category of an access network device of a cell in which the terminal device is located, to monitor a paging message by using the eDRX configuration information of the first type or monitor a paging message by using the eDRX configuration information of the second type

FIG. 4b

| Terminal device | First access network device | Second access network device |
|---|---|---|

701: Send eDRX configuration information of a first type

702: Send a first paging message (including the eDRX configuration information of the first type and eDRX configuration information of a second type)

703: If a category of the second access network device is a first category, send a second paging message based on the eDRX configuration information of the first type; or if a category of the second access network device is a second category, send a second paging message based on the eDRX configuration information of the second type

704: Determine, based on a category of an access network device of a cell in which the terminal device is located, to monitor a paging message by using the eDRX configuration information of the first type or monitor a paging message by using the preconfigured eDRX configuration information of the second type

FIG. 5a

| Terminal device | First access network device | Second access network device | CN |
|---|---|---|---|

801: Send a first message

802: Determine eDRX configuration information of a first type and eDRX configuration information of a second type

803: Notify the CN of the eDRX configuration information of the first type

804: Send an RRC connection release message (including the eDRX configuration information of the first type)

805: Send first signaling (trigger paging)

806: Send a first paging message (including the eDRX configuration information of the first type and the eDRX configuration information of the second type)

807: If a category of the second access network device is a first category, send a paging message for the terminal device based on the eDRX configuration information of the first type; or if a category of the second access network device is a second category, send a paging message for the terminal device based on the eDRX configuration information of the second type

808: Determine, based on a category of an access network device of a cell in which the terminal device is located, to monitor a paging message by using the eDRX configuration information of the first type or monitor a paging message by using the preconfigured eDRX configuration information of the second type

FIG. 5b

| Terminal device | First access network device | Second access network device | Core network device |
|---|---|---|---|

901: Send eDRX configuration information of a first type

902: Indicate, to the core network device, that the terminal device monitors a paging message by using the eDRX configuration information of the first type

903: If a category of an access network device of a cell in which the terminal device is located is a first category, the terminal device monitors a paging message based on the eDRX configuration information of the first type

904: When moving from the cell served by the access network device of the first category to a cell served by an access network device of a second category, the terminal device sends an RRC connection resume request to the second access network device

905: Send a context request

906: When receiving the context request, the first access network device indicates, to the core network device, that the eDRX configuration information of the first type is updated

907: Send eDRX configuration information of a second type or a context of the terminal device

908: Send the eDRX configuration information of the second type

FIG. 6a

| Terminal device | First access network device | Second access network device | CN |
|---|---|---|---|

1001: Send a first message

1002: Determine eDRX configuration information of a first type

1003: Indicate, to the CN, that the terminal device monitors a paging message by using the eDRX configuration information of the first type

1004: Send an RRC connection release message (including the eDRX configuration information of the first type)

1005: If a category of an access network device of a cell in which the terminal device is located is a first category, the terminal device monitors a paging message based on the eDRX configuration information of the first type

1006: When moving from the cell served by the access network device of the first category to a cell served by an access network device of a second category, the terminal device sends an RRC connection resume request to the second access network device

1007: Send a context request

**Procedure 1**

1008: Indicate, to the CN, that the first eDRX configuration information is updated

1009: Send an RRC connection release message

1010: Send the RRC connection release message

**Procedure 2**

1011: Send a context of the terminal device

1012: Indicate, to the CN, that the first eDRX configuration information is updated

1013: Indicate, to the CN, that the first eDRX configuration information is updated

1014: Path switch

1015: RRC connection release message (including second eDRX configuration information)

FIG. 6b

1000

| 1100 | | 1200 |
|---|---|---|
| Transceiver unit | | Processing unit |

Communication apparatus

FIG. 7

2000

2100

Transceiver

2200

Processor

2400

2300

Memory

FIG. 8

3001

Logic circuit

3002

Interface

Chip

FIG. 9

## INTERNATIONAL SEARCH REPORT

| International application No. |
|---|
| **PCT/CN2024/074714** |

| A. | CLASSIFICATION OF SUBJECT MATTER |
|---|---|

H04W76/28(2018.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT; ENTXTC; VEN; ENTXT; CNKI; 3GPP; IEEE: 寻呼, eDRX, DRX, 周期, PTW, 阈值, 接入网, 类别, 类型, 第一, 第二, 能力, 指示, 更新, pag+, period, threshold, access network, type, first, second, ability, indication, renew+, updat+, replac+

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | WO 2024007192 A1 (GUANGDONG OPPO MOBILE TELECOMMUNICATIONS CORP., LTD.) 11 January 2024 (2024-01-11)<br>description, paragraphs 73-136 | 7, 8, 12, 13, 16, 17, 30, 31, 34, 35 |
| X | CN 113906796 A (BEIJING XIAOMI MOBILE SOFTWARE CO., LTD.) 07 January 2022 (2022-01-07)<br>description, paragraphs 88-100, 163, and 240-246 | 7, 8, 12, 13, 16, 17, 30, 31, 34, 35 |
| X | WO 2023014183 A1 (SAMSUNG ELECTRONICS CO., LTD.) 09 February 2023 (2023-02-09)<br>claims 1-15, and description, paragraphs 8 and 9 | 7, 8, 12, 13, 16, 17, 30, 31, 34, 35 |
| X | CN 112788618 A (DATANG MOBILE COMMUNICATIONS EQUIPMENT CO., LTD.) 11 May 2021 (2021-05-11)<br>description, paragraphs 245-296 | 7, 8, 12, 13, 16, 17, 30, 31, 34, 35 |
| A | CN 109041269 A (CHINA UNITED NETWORK COMMUNICATIONS GROUP CO., LTD.) 18 December 2018 (2018-12-18)<br>entire document | 1-35 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 March 2024** | **26 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/074714**

| Patent document cited in search report | | | Publication date (day/month/year) | Patent family member(s) | | | Publication date (day/month/year) |
|---|---|---|---|---|---|---|---|
| WO | 2024007192 | A1 | 11 January 2024 | None | | | |
| CN | 113906796 | A | 07 January 2022 | CN | 113906796 | B | 18 July 2023 |
| | | | | WO | 2023029051 | A1 | 09 March 2023 |
| WO | 2023014183 | A1 | 09 February 2023 | KR | 20230021513 | A | 14 February 2023 |
| CN | 112788618 | A | 11 May 2021 | CN | 112788618 | B | 12 May 2023 |
| | | | | WO | 2021088503 | A1 | 14 May 2021 |
| CN | 109041269 | A | 18 December 2018 | CN | 109041269 | B | 11 September 2020 |

Form PCT/ISA/210 (patent family annex) (July 2022)

**REFERENCES CITED IN THE DESCRIPTION**

**Patent documents cited in the description**

- CN 202310127532